(19) Europäisches Patentamt
European Patent Office
Office européen des brevets

(11) **EP 2 983 300 B1**

(12) **EUROPEAN PATENT SPECIFICATION**

(45) Date of publication and mention of the grant of the patent:
**23.10.2019 Bulletin 2019/43**

(51) Int Cl.:
***H04B 7/02*** *(2018.01)*

(21) Application number: **14798215.1**

(86) International application number:
**PCT/CN2014/077436**

(22) Date of filing: **14.05.2014**

(87) International publication number:
**WO 2014/183641 (20.11.2014 Gazette 2014/47)**

(54) **METHOD, DEVICE AND SYSTEM FOR COORDINATED COMMUNICATION BETWEEN TERMINALS**

VERFAHREN, VORRICHTUNG UND SYSTEM FÜR KOORDINIERTE KOMMUNIKATION ZWISCHEN ENDGERÄTEN

PROCÉDÉ, DISPOSITIF ET SYSTÈME DE COMMUNICATION COORDONNÉE ENTRE TERMINAUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.05.2013 CN 201310177773**

(43) Date of publication of application:
**10.02.2016 Bulletin 2016/06**

(73) Proprietor: **Huawei Technologies Co., Ltd.
Longgang District
Shenzhen, Guangdong 518129 (CN)**

(72) Inventors:
 • **CHEN, Dageng
 Shenzhen
 Guangdong 518129 (CN)**
 • **LI, Jian
 Shenzhen
 Guangdong 518129 (CN)**

(74) Representative: **Kreuz, Georg Maria
Huawei Technologies Duesseldorf GmbH
Riesstraße 25
80992 München (DE)**

(56) References cited:
**WO-A2-2012/108716    CN-A- 101 471 754
CN-A- 102 870 340    US-A1- 2007 280 172
US-A1- 2010 106 797    US-A1- 2012 142 345**

 • **VAN NEE R: "A new OFDM standard for high rate wireless LAN in the 5 GHz band", VEHICULAR TECHNOLOGY CONFERENCE, 1999. VTC 1999 - FALL. IEEE VTS 50TH AMSTERDAM, NETHERLANDS 19-22 SEPT. 1999, PISCATAWAY, NJ, USA,IEEE, US, vol. 1, 19 September 1999 (1999-09-19), pages 258-262, XP010352876, ISBN: 978-0-7803-5435-7**

## Description

## TECHNICAL FIELD

The present invention relates to the field of communications, and in particular, to a method for inter-terminal coordinated communication, a device and a system.

## BACKGROUND

A coordinated multiple points transmission technology can improve a capability of covering a cell-edge user, further enhance a capacity of a wireless communication system, and particularly improve a transmission capability of an edge user, thereby becoming one of key technologies in a next generation of wireless communication system. A core idea of the coordinated multiple points transmission technology is to transmit information to a specific wireless terminal, or receive and process information from the specific wireless terminal by means of coordination of a plurality of geographically adjacent wireless transmission points. Coordinated multiple points transmission may be applied to a network side and may also be applied to a terminal side.

By means of inter-terminal coordinated transmission, system performance may be further improved and enhanced. For example, an available space dimension of the terminal side may be effectively improved, and a system capacity is improved; moreover, interference from an adjacent terminal may also be effectively suppressed, and a transmission quality is improved.

In prior art, an inter-terminal coordinated communication technology is generally achieved by the following method. Two base stations jointly process information needing to be sent and send the processed information to two terminals respectively. Under a certain signal to noise ratio condition, the two terminals respectively demodulate and decode respective received information and send the demodulated and decoded information to the other. The two terminals may complete demodulation of respective information only after completely demodulating and decoding information of the other terminal.

U.S. patent publication No. US2012/142345A1 provides a cooperative communication technology of a target terminal and a cooperative terminal. In an environment in which interference exists between cells, cooperation between terminals may be performed in order to improve the quality of signals that are received from a base station.

The paper titled "A New OFDM Standard for High Rate Wireless LAN in the 5 GHz" provides an overview of the OFDM based wireless LAN standard developed by IEEE 802.11, ETSI and MMAC. Signal processing issues are described and some simulations are shown to demonstrate the achievable performance in multipath fading channels.

The prior art has the following problems: the network side needs to jointly process a signal sent by the network side, which increases a complexity of information processing of the network side, and a terminal side needs to completely demodulate and decode information of other terminals, which increases a processing load of the terminal.

## SUMMARY

Embodiments of the present invention provide a method, a device and a system for inter-terminal coordinated communication, which achieve inter-terminal coordinated transmission by sharing specific information between cooperative terminals so as to improve performance of a system.

## BRIEF DESCRIPTION OF DRAWINGS

To illustrate technical solutions of the present invention more clearly, the accompanying drawings of embodiments of the present invention are briefly introduced. Apparently, the accompanying drawings in the description below show merely some of the embodiments of the present invention.

Fig. 1 is a flow chart of a method for coordinated communication of a first terminal side provided by an embodiment of the present invention;
Fig. 2 is a flow chart of a method for coordinated communication of a second terminal side provided by an embodiment of the present invention;
Fig. 3 is a schematic diagram of an application scenario provided by an embodiment of the present invention;
Fig. 4 is a schematic diagram of another application scenario provided by an embodiment of the present invention;
Fig. 5 is a flow chart of a method for inter-terminal coordinated communication provided by an embodiment of the present invention;
Fig. 6 is a flow chart of another method for inter-terminal coordinated communication provided by an embodiment of the present invention;
Fig. 7 is a flow chart of another method for inter-terminal coordinated communication provided by an embodiment of the present invention;
Fig. 8 is a schematic diagram of information carried on a frequency domain resource of a first terminal side provided by an embodiment of the present invention;
Fig. 9 is a flow chart of another method for inter-terminal coordinated communication provided by an embodiment of the present invention;
Fig. 10 is a schematic diagram of another information carried on a frequency domain resource of a first terminal side provided by an embodiment of the present invention;
Fig. 11 is a flow chart of another method for inter-terminal coordinated communication provided by an embodiment of the present invention;

Fig. 12 is a schematic diagram of another information carried on a frequency domain resource of a first terminal side provided by an embodiment of the present invention;

Fig. 13 is a schematic diagram of another information carried on a frequency domain resource of a first terminal side provided by an embodiment of the present invention;

Fig. 14 is a schematic diagram of another information carried on a frequency domain resource of a first terminal side provided by an embodiment of the present invention;

Fig. 15 is an apparatus schematic diagram of a first terminal provided by an embodiment of the present invention;

Fig. 16 is an apparatus schematic diagram of another first terminal provided by an embodiment of the present invention;

Fig. 17 is an apparatus schematic diagram of another first terminal provided by an embodiment of the present invention;

Fig. 18 is an apparatus schematic diagram of another first terminal provided by an embodiment of the present invention;

Fig. 19 is an apparatus schematic diagram of a second terminal provided by an embodiment of the present invention;

Fig. 20 is an apparatus schematic diagram of another second terminal provided by an embodiment of the present invention;

Fig. 21 is an apparatus schematic diagram of a first terminal provided by an embodiment of the present invention;

Fig. 22 is an apparatus schematic diagram of a second terminal provided by an embodiment of the present invention.

## DETAILED DESCRIPTION

The invention is defined by the appended claims. In the following, embodiments not falling within the scope of the claims should be understood as examples useful to understand the invention.

A clear and complete description of technical solutions of the present invention will be given below with reference being made to the accompanying drawings of embodiments of the present invention. Apparently, the embodiments described below are merely a part, but not all, of the embodiments of the present invention.

It should be understood that, the technical solutions of the embodiments of the present invention may be applied to various communication systems, for example: a long term evolution (Long Term Evolution, short for "LTE") system, an LTE frequency division duplex (Frequency Division Duplex, short for "FDD") system, an LTE time division duplex (Time Division Duplex, short for "TDD"), a worldwide interoperability for microwave access (Worldwide Interoperability for Microwave Access, short for "WiMAX") communication system or the like.

The embodiments of the present invention respectively illustrate from a first terminal side and a second terminal side and illustrate an interactive embodiment of the two. But it does not mean that the two must be interactively implemented. In fact, when a first terminal and a second terminal are separately implemented, problems respectively existing on the first terminal side and the second terminal side are solved as well. It is just that when the two are cooperatively used, a better technical effect will be obtained.

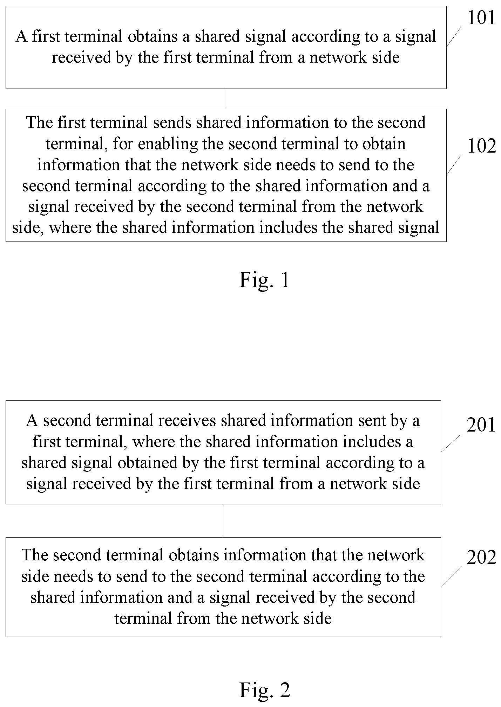

Fig. 1 is a flow chart of a method for coordinated communication of a first terminal side. Referring to the figure, the method may include the following steps.

101: A first terminal obtains a shared signal according to a signal received by the first terminal from a network side.

Exemplarily, the network side in the embodiment of the present invention may refer to a sending terminal of a signal received by the first terminal and a second terminal from a space. For example, the network side may be one base station or two base stations, and may also be a plurality of base stations.

Exemplarily, the first terminal may obtain the shared signal according to the signal received by the first terminal from the network side in any one of the following manners.

1. The first terminal performs time domain sampling processing on the signal received by the first terminal from the network side to obtain the shared signal.

2. The first terminal performs time domain sampling processing, cyclic prefix (CP) removal and time domain digital automatic gain control (DAGC) processing in turn on the signal received by the first terminal from the network side to obtain the shared signal.

3. The first terminal performs time domain sampling processing, CP removal, time domain DAGC, fast Fourier transform (FFT) and removal of information carried on a frequency domain resource of the first terminal in turn on the signal received by the first terminal from the network side to obtain the shared signal.

4. The first terminal performs time domain sampling processing, CP removal, time domain DAGC and fast Fourier transform (FFT) processing in turn on the signal received by the first terminal from the network side to obtain the shared signal.

5. Exemplarily, the method may further include:

the first terminal receives identity information of the second terminal; and

based on 4, the first terminal obtains the shared signal according to the identity information of the second terminal, where the shared signal includes information carried on a frequency domain resource corresponding to the second terminal.

Exemplarily, according to the above-mentioned manner 4, after the first terminal obtains the shared signal according to the signal received by the first terminal from the network side, the method may further include:

obtaining, by the first terminal, a signal quality of the shared signal; and

not sending, by the first terminal, the shared information to the second terminal, when the signal quality of the shared signal is less than a preset threshold; or,

sending, by the first terminal, the shared information to the second terminal, when the signal quality of the shared signal is greater than or equal to the preset threshold.

102: The first terminal sends shared information to the second terminal, for enabling the second terminal to obtain information that the network side needs to send to the second terminal according to the shared information and a signal received by the second terminal from the network side, where the shared information includes the shared signal.

Exemplarily, the first terminal may send the shared information to the second terminal in a direct communication mode, as long as the first terminal and the second terminal may directly communicate geographically. The direct communication mode of the first terminal and the second terminal is not limited in the embodiment of the present invention. For example, it may be short-range communication modes, such as WiFi, a near field communication or the like.

Exemplarily, since the manners of obtaining the shared signal according to the signal received by the first terminal from the network side are different, contents of the shared information are also different. For example,

When the first terminal adopts the above-mentioned manner 1 to obtain the shared signal, the shared information may only include the shared signal.

When the first terminal adopts the above-mentioned manner 2, 4 or 5 to obtain the shared signal, the shared information may include the shared signal and a DAGC factor of the time domain DAGC processing performed by the first terminal on the signal received by the first terminal from the network side.

When the first terminal adopts the above-mentioned manner 3 to obtain the shared signal, the shared information may include the shared signal, a DAGC factor of the time domain DAGC processing performed by the first terminal on the signal received by the first terminal from the network side and a serial number of a frequency domain resource corresponding to the shared signal.

According to the method for inter-terminal coordinated communication provided by the embodiment of the present invention, the first terminal obtains the shared signal according to the signal received by the first terminal from the network side. The first terminal sends the shared information to the second terminal, for enabling the second terminal to obtain the information that the network side needs to send to the second terminal according to the shared information and the signal received by the second terminal from the network side. The shared information includes the shared signal. Problems in the prior art that the network side needs to jointly process a signal sent by the network side which increases a complexity of information processing of the network side, and that a terminal needs to completely demodulate information of other terminals which increases a processing load of the terminal are overcome.

Fig. 2 is a flow chart of a method for coordinated communication of a second terminal side. Referring to the figure, the method may include the following steps.

201: A second terminal receives shared information sent by a first terminal, where the shared information includes a shared signal obtained by the first terminal according to a signal received by the first terminal from a network side.

Exemplarily, the network side in the embodiment of the present invention may refer to a sending terminal of a signal received by the first terminal and the second terminal from a space. For example, the network side may be one base station or two base stations, and may also be a plurality of base stations.

Exemplarily, the second terminal may receive the shared information sent by the first terminal in a direct communication mode, as long as the first terminal and the second terminal may directly communicate geographically. The direct communication mode of the first terminal and the second terminal is not limited in the embodiment of the present invention. For example, it may be short-range communication modes, such as WiFi, a near field communication or the like.

Exemplarily, the first terminal may obtain the shared signal according to the signal received by the first terminal from the network side in any one of the following manners.

1. The first terminal performs time domain sampling processing on the signal received by the first terminal from the network side to obtain the shared signal.
2. The first terminal performs time domain sampling processing, cyclic prefix (CP) removal and time domain digital automatic gain control (DAGC) processing in turn on the signal received by the first terminal from the network side to obtain the shared signal.
3. The first terminal performs time domain sampling processing, CP removal, time domain DAGC, fast Fourier transform (FFT) and removal of information carried on a frequency domain resource of the first terminal in turn on the signal received by the first terminal from the network side to obtain the shared signal.

4. The first terminal performs time domain sampling processing, CP removal, time domain DAGC and fast Fourier transform (FFT) processing in turn on the signal received by the first terminal from the network side to obtain the shared signal.

5. Exemplarily, the method may further include:

the second terminal sends identity information of the second terminal to the first terminal, so that based on 4, the first terminal obtains the shared signal according to the identity information of the second terminal, where the shared signal includes information carried on a frequency domain resource corresponding to the second terminal;

and the first terminal obtains a signal quality of the shared signal;

and the first terminal does not send the shared information to the second terminal, when the signal quality of the shared signal is less than a preset threshold;
or,

the first terminal sends the shared information to the second terminal, when the signal quality of the shared signal is greater than or equal to the preset threshold.

Exemplarily, since the manners of obtaining the shared signal according to the signal received by the first terminal from the network side are different, contents of the shared information are also different. For example,

1. When the first terminal adopts the above-mentioned manner 1 to obtain the shared signal, the shared information may only include the shared signal.

2. When the first terminal adopts the above-mentioned manner 2, 4 or 5 to obtain the shared signal, the shared information may include the shared signal and a DAGC factor of the time domain DAGC processing performed by the first terminal on the signal received by the first terminal from the network side.

3. When the first terminal adopts the above-mentioned manner 3 to obtain the shared signal, the shared information may include the shared signal, a DAGC factor of the time domain DAGC processing performed by the first terminal on the signal received by the first terminal from the network side and a serial number of a frequency domain resource corresponding to the shared signal.

202: The second terminal obtains information that the network side needs to send to the second terminal according to the shared information and a signal received by the second terminal from the network side.

Exemplarily, according to different manners of obtaining the shared signal according to the signal received by the first terminal from the network side and different shared information, manners in which the second terminal obtains the information that the network side needs to send to the second terminal according to the shared information and the signal received by the second terminal from the network side are different. For example:

1. When the first terminal adopts the above-mentioned manner 1 to obtain the shared signal, and the shared information includes the shared signal, obtaining, by the second terminal, the information that the network side needs to send to the second terminal according to the shared information and the signal received by the second terminal from the network side, may include:

performing, by the second terminal, CP removal, time domain DAGC, fast Fourier transform FFT, demodulating and decoding in turn on the shared signal to obtain information of the second terminal in the shared signal; and

performing, by the second terminal, time domain sampling processing, CP removal, time domain DAGC, FFT, demodulating and decoding in turn on the signal received by the second terminal from the network side to obtain information of the second terminal received by the second terminal.

2. When the first terminal adopts the above-mentioned manner 2 to obtain the shared signal, and the shared information includes the shared signal and the DAGC factor of the time domain DAGC processing performed by the first terminal on the signal received by the first terminal from the network side, obtaining, by the second terminal, the information that the network side needs to send to the second terminal according to the shared information and the signal received by the second terminal from the network side, may include:

performing, by the second terminal, DAGC compensation processing on the shared signal according to the DAGC factor of the time domain DAGC processing performed on the signal received by the first terminal from the network side, and performing FFT, demodulating and decoding in turn on the processed shared signal to obtain the information of the second terminal in the shared signal; and

performing, by the second terminal, time domain sampling processing, CP removal, time domain DAGC, FFT, demodulating and decoding in turn on the signal received by the second terminal from the network side to obtain information of the second terminal received by the second terminal.

3. When the first terminal adopts the above-mentioned manner 3 to obtain the shared signal, and the shared information includes the shared signal, the DAGC factor of the time domain DAGC processing performed by the first terminal on the signal received by the first terminal from the network side and the serial number of the frequency domain resource corresponding to the shared signal, obtaining, by the second terminal, the information that the network side needs to send to the second terminal according to the shared information and the signal received by the second terminal from the network side, may include:

performing, by the second terminal, DAGC compensation processing on the shared signal according to the DAGC factor of the time domain DAGC processing performed on the signal received by the first terminal from the network side, and performing demodulating and decoding in turn on the processed shared signal according to the serial number of the frequency domain resource corresponding to the shared signal to obtain information of the second terminal in the shared signal; and

performing, by the second terminal, time domain sampling processing, CP removal, time domain DAGC, FFT, demodulating and decoding in turn on the signal received by the second terminal from the network side to obtain information of the second terminal received by the second terminal.

4. When the first terminal adopts the above-mentioned manner 4 to obtain the shared signal, and the shared information includes the shared signal and the DAGC factor of the time domain DAGC processing performed by the first terminal on the signal received by the first terminal from the network side, obtaining, by the second terminal, the information that the network side needs to send to the second terminal according to the shared information and the signal received by the second terminal from the network side, may include:

obtaining, by the second terminal, information carried on a frequency domain resource of the second terminal according to a serial number of the frequency domain resource corresponding to the second terminal and allocated by a system, performing DAGC compensation processing on the information carried on the frequency domain resource of the second terminal according to the DAGC factor of the time domain DAGC processing performed on the signal received by the first terminal from the network side, and performing demodulating and decoding in turn on the processed information carried on the frequency domain resource of the second terminal to obtain information of the second terminal in the shared signal; and

performing, by the second terminal, time domain sampling processing, CP removal, time domain DAGC, FFT, demodulating and decoding in turn on the signal received by the second terminal from the network side to obtain information of the second terminal received by the second terminal.

5. When the first terminal adopts the above-mentioned manner 5 to obtain the shared signal, and the shared information includes the shared signal and the DAGC factor of the time domain DAGC processing performed by the first terminal on the signal received by the first terminal from the network side, obtaining, by the second terminal, the information that the network side needs to send to the second terminal according to the shared information and the signal received by the second terminal from the network side, includes:

performing, by the second terminal, DAGC compensation processing on the shared signal according to the DAGC factor of the time domain DAGC processing performed on the signal received by the first terminal from the network side, and performing demodulating and decoding in turn on the processed shared signal to obtain information of the second terminal in the shared signal; and

performing, by the second terminal, time domain sampling processing, CP removal, time domain DAGC, FFT, demodulating and decoding in turn on the signal received by the second terminal from the network side to obtain information of the second terminal received by the second terminal.

According to the method for inter-terminal coordinated communication provided by the embodiment of the present invention, the second terminal receives the shared information sent by the first terminal and obtains the information that the network side needs to send to the second terminal according to the shared information and the signal received by the second terminal from the network side. Problems in the prior art that the network side needs to jointly process a signal sent by the network side and a terminal needs to completely demodulate information of other terminals which increase a complexity of information processing of the network side and a processing load of the terminal are overcome.

The above-mentioned method embodiments will be illustrated below by specific embodiments.

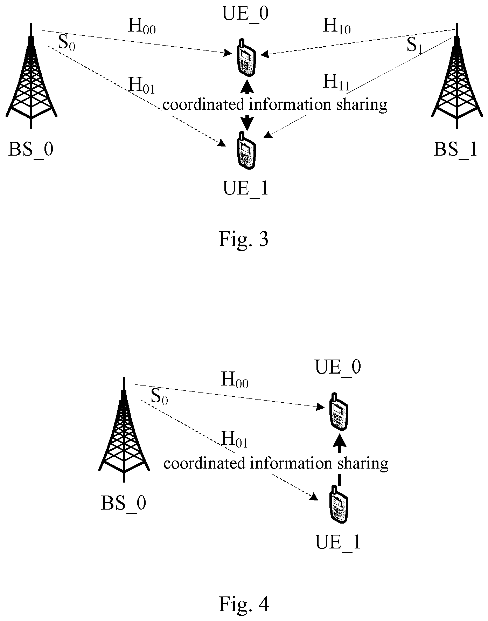

Exemplarily, two application scenarios are set in the embodiments of the present invention, and the following specific embodiments will be respectively illustrated in the two application scenarios. Fig. 3 illustrates a first application scenario. The application scenario includes a first base station, a second base station, a first terminal and a second terminal. In the embodiments of the present invention, the first base station is marked as BS_1, the second base station is marked as BS_0, the first terminal is marked as UE_1 and the second terminal is marked as UE_0, where the first base station BS_1 needs to send information to the first terminal UE_1, and the second base station BS_0 needs to send information to the second terminal UE_0. Fig. 4 illustrates a second application scenario. The application scenario includes a second base station BS_0, a first terminal UE_1 and a second terminal UE_0, where the second base station BS_0 needs to send information to the second terminal UE_0.

Embodiment 1

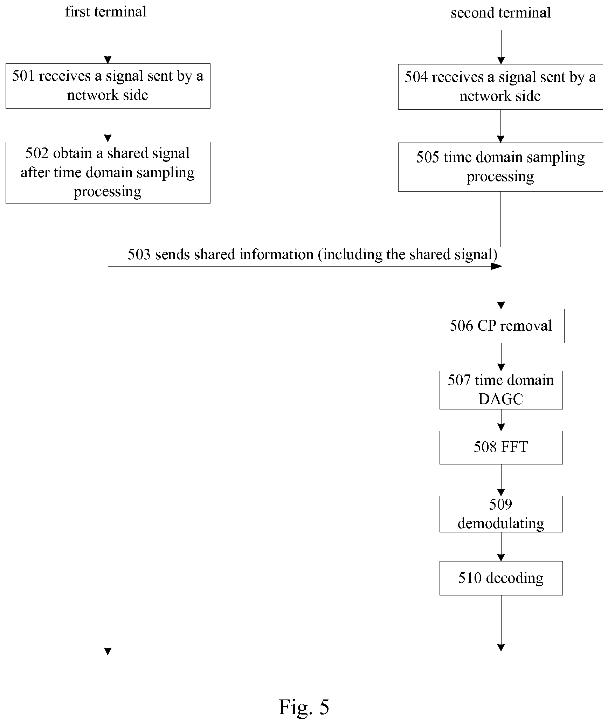

The above-mentioned first application scenario is selected for illustration in the embodiment, referring to Fig. 5, including:
S501: a first terminal receives a signal sent by a network side.

Exemplarily, since a wireless signal is propagated in a space, the first terminal UE_1 may receive both a signal sent by the first base station BS_1 and a signal sent by the second base station BS_0.

Exemplarily, the signal received by the first terminal UE_1 may be expressed by the following formula:

$$Y_1 = H_{11} \cdot S_1 + H_{01} \cdot S_0 + N_1,$$

where $Y_1$ expresses the signal received by the first terminal UE_1, $H_{11}$ expresses a space channel between the first base station BS_1 and the first terminal UE_1, $H_{01}$ expresses a space channel between the second base station BS_0 and the first terminal UE_1, $S_1$ and $S_0$ respectively express information sent by the first base station BS_1 and the second base station BS_0, and $N_1$ expresses a noise signal received by the first terminal UE_1.

For the first terminal UE_1, $H_{01} \cdot S_0$ is an interference signal, but for the second terminal UE_0, $H_{01} \cdot S_0$

is a useful signal. Thus, if the first terminal UE_1 shares the formula with the second terminal UE_0, the second terminal UE_0 may improve demodulation performance for S0.

S502: the first terminal performs time domain sampling processing on the signal received by the first terminal from the network side to obtain a shared signal.

S503: the first terminal sends shared information to the second terminal, where the shared information includes the shared signal.

S504: the second terminal receives a signal sent by the network side.

Since a wireless signal is propagated in a space, the second terminal UE_0 may receive both a signal sent by the first base station BS_1 and a signal sent by the second base station BS_0,
the signal received by the second terminal UE_0 may be described by the following formula:

$$Y_0 = H_{00} \cdot S_0 + H_{10} \cdot S_1 + N_0,$$

where $Y_0$ expresses the signal received by the second terminal UE_0, $H_{00}$ expresses a space channel between the second base station and the second terminal, $H_{10}$ expresses a space channel between the first base station and the second terminal, and $N_0$ expresses a noise signal received by the second terminal UE_0.

S505: the second terminal performs time domain sampling processing on the signal received by the second terminal from the network side.

S506: the second terminal performs CP removal processing on the shared signal and the signal received by the second terminal from the network side.

S507: the second terminal performs time domain DAGC processing on the shared signal with CP removed and the signal, with CP removed, received by the second terminal from the network side.

S508: the second terminal performs FFT processing on the shared signal after the time domain DAGC processing and the signal received by the second terminal from the network side after the time domain DAGC processing.

S509: the second terminal demodulates the shared signal after the FFT processing and the signal received by the second terminal from the network side after the FFT processing.

Exemplarily, the second terminal may obtain information of $H_{01}$ by channel estimation in demodulating process of itself, such that the second terminal obtains information that the network side needs to send to the second terminal according to $H_{01}$.

S510: the second terminal decodes the demodulated shared signal and the demodulated signal received by the second terminal from the network side.

For example, the second terminal UE_0 obtains the following receiving signal according to obtained channel information:

$$Y = \begin{bmatrix} Y_0 \\ Y_1 \end{bmatrix} = \begin{bmatrix} H_{00} \\ H_{01} \end{bmatrix} \cdot S_0 + \begin{bmatrix} H_{10} \\ H_{11} \end{bmatrix} \cdot S_1 + \begin{bmatrix} N_0 \\ N_1 \end{bmatrix}.$$

According to a receiver $W_0$ adopted by the second terminal UE_0, an estimated value of S0 sent by the second base station BS_0 may be obtained:

$$\hat{S}_0 = W_0 \cdot Y.$$

The second terminal UE_0 demodulates $\hat{S}_0$ via $[H_{00}\ H_{01}]^T$ to achieve sharing of the first terminal UE_1, thereby improving a quality of the received signal of the second terminal UE_0.

According to the method for inter-terminal coordinated communication provided by the embodiment of the present invention, the second terminal receives the shared information sent by the first terminal and obtains the information that the network side needs to send to the second terminal according to the shared information and the signal received by the second terminal from the network side. Problems in the prior art that the network side needs to jointly process a signal sent by the network side which increases a complexity of information processing of the network side, and that a terminal needs to completely demodulate information of other terminals which increases a processing load of the terminal are overcome.

Embodiment 2

The above-mentioned second application scenario is selected for illustration in the embodiment. Steps and a principle of the embodiment are same as those of embodiment 1. A difference is that signals reiceived by the first terminal UE_1 and the second terminal UE_0 from the network side are different, and only the difference is illustrated herein.

In the second application scenario, since a wireless signal is propagated in a space, the first terminal UE_1 may receive a signal sent by the second base station BS_0.

Exemplarily, the signal received by the first terminal UE_1 may be expressed by the following formula:

$$Y_1 = H_{01} \cdot S_0 + N_1,$$

where $Y_1$ expresses the signal received by the first terminal UE_1, $H_{01}$ expresses a space channel between the second base station and the first terminal, $S_0$ expresses information sent by the second base station, and $N_1$ expresses a noise signal received by the first terminal UE_1.

The signal received by the second terminal UE_0 may be described by the following formula:

$$Y_0 = H_{00} \cdot S_0 + N_0,$$

where $Y_0$ expresses the signal received by the second terminal UE_0, $H_{00}$ expresses a space channel between the second base station and the second terminal, and $N_0$ expresses a noise signal received by the second terminal UE_0.

The first terminal UE_1 performs same processing as that in embodiment 1 on Y1 to obtain shared information and sends the shared information to the second terminal UE_0, and the second terminal UE_0 performs same processing as that in embodiment 1 on $Y_1$ and $Y_0$ to obtain information that the network side needs to send to the second terminal.

For example, the second terminal UE_0 obtains the following receiving signal according to obtained channel information:

$$Y = \begin{bmatrix} Y_0 \\ Y_1 \end{bmatrix} = \begin{bmatrix} H_{00} \\ H_{01} \end{bmatrix} \cdot S_0 + \begin{bmatrix} N_0 \\ N_1 \end{bmatrix}.$$

According to a receiver $W_0$ adopted by the second terminal UE_0, an estimated value of S0 sent by the second base station BS_0 may be obtained:

$$\hat{S}_0 = W_0 \cdot Y.$$

The second terminal UE_0 demodulates $\hat{S}_0$ via $[H_{00}\ H_{01}]^T$ to achieve sharing of the first terminal UE_1, thereby improving a quality of the received signal of the second terminal UE_0.

According to the method for inter-terminal coordinated communication provided by the embodiment of the present invention, the second terminal receives the shared information sent by the first terminal and obtains the information that the network side needs to send to the second terminal according to the shared information and the signal received by the second terminal from the network side. Problems in the prior art that the network side needs to jointly process a signal sent by the network side which increases a complexity of information processing of the network side, and that a terminal needs to completely demodulate information of other terminals which increases a processing load of the terminal are overcome.

Embodiment 3

The above-mentioned first application scenario is selected for illustration in the embodiment. A principle of the embodiment is same as that of the embodiment 1.

A difference is that a manner in which the first terminal UE_1 obtains a shared signal is different, and only the difference is illustrated herein.

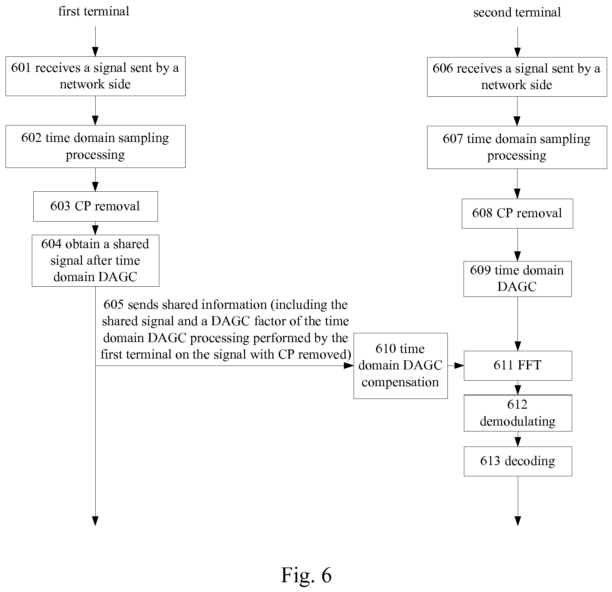

Referring to Fig. 6, the following is included.

S601: a first terminal receives a signal sent by a network side.

S602: the first terminal performs time domain sampling processing on the signal received by the first terminal from the network side.

S603: the first terminal performs CP removal processing on the signal after the time domain sampling processing.

S604: the first terminal performs time domain DAGC processing on the signal with CP removed to obtain a shared signal.

Exemplarily, by means of the time domain DAGC processing, information amount of the shared signal may be reduced, thus a data size of inter-terminal transmission may be reduced.

S605: the first terminal sends shared information to a second terminal.

Exemplarily, the shared information includes the shared signal and a DAGC factor of the time domain DAGC processing performed by the first terminal on the signal with CP removed.

S606: the second terminal receives a signal sent by the network side.

S607: the second terminal performs time domain sampling processing on the signal received by the second terminal from the network side.

S608: the second terminal performs CP removal processing on the shared signal and the signal received by the second terminal from the network side.

S609: the second terminal performs time domain DAGC processing on the signal, with CP removed, received by the second terminal from the network side.

S610: the second terminal performs DAGC compensation processing on the shared signal.

S611: the second terminal performs FFT processing on the shared signal after the DAGC compensation processing and the signal received by the second terminal from the network side after the DAGC processing.

S612: the second terminal demodulates the shared signal after the FFT processing and the signal received by the second terminal from the network side after the FFT processing.

Exemplarily, the second terminal may obtain information of $H_{01}$ by channel estimation in demodulating process of itself, such that the second terminal obtains information that the network side needs to send to the second terminal according to $H_{01}$.

S613: the second terminal decodes the demodulated shared signal and the demodulated signal received by the second terminal from the network side.

For example, the second terminal UE_0 obtains the following receiving signal according to obtained channel information:

$$Y = \begin{bmatrix} Y_0 \\ Y_1 \end{bmatrix} = \begin{bmatrix} H_{00} \\ H_{01} \end{bmatrix} \cdot S_0 + \begin{bmatrix} H_{10} \\ H_{11} \end{bmatrix} \cdot S_1 + \begin{bmatrix} N_0 \\ N_1 \end{bmatrix}.$$

According to a receiver $W_0$ adopted by the second terminal UE_0, an estimated value of S0 sent by the second base station BS_0 may be obtained:

$$\hat{S}_0 = W_0 \cdot Y.$$

The second terminal UE_0 demodulates $\hat{S}_0$ via $[H_{00}\ H_{01}]^T$ to achieve sharing of the first terminal UE_1, thereby improving a quality of the received signal of the second terminal UE_0.

According to the method for inter-terminal coordinated communication provided by the embodiment of the present invention, the second terminal receives the shared information sent by the first terminal and obtains the information that the network side needs to send to the second terminal according to the shared information and the signal received by the second terminal from the network side. The shared information is obtained by the first terminal after performing the time domain DAGC processing on the information received by the first terminal from the network side. So the information amount of the shared signal is reduced, thus the data size of the inter-terminal transmission may be reduced. Problems in the prior art that the network side needs to jointly process a signal sent by the network side which increases a complexity of information processing of the network side, and that a terminal needs to completely demodulate information of other terminals which increases a processing load of the terminal are overcome.

Embodiment 4

The above-mentioned first application scenario is selected for illustration in the embodiment. A principle of the embodiment is same as that of the embodiment 1. A difference is that a manner in which the first terminal UE_1 obtains a shared signal is different, and only the difference is illustrated herein.

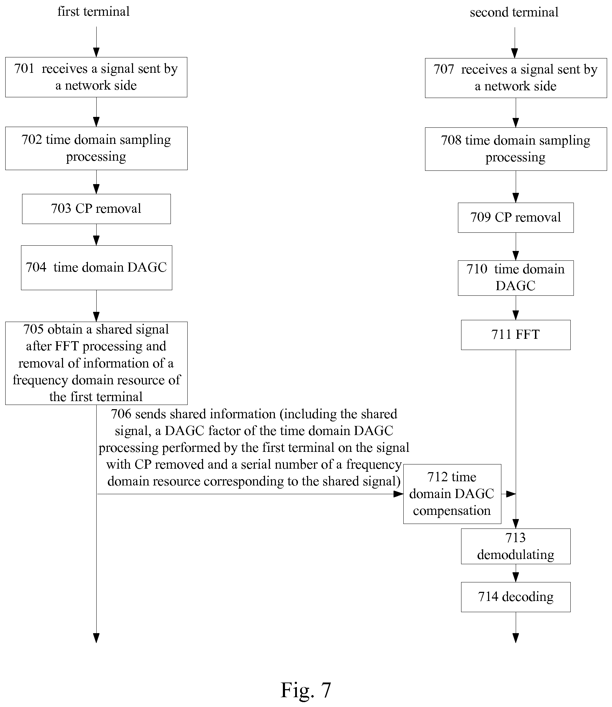

Referring to Fig. 7, the following is included.

S701: a first terminal receives a signal sent by a network side.

S702: the first terminal performs time domain sampling processing on the signal received from the network side.

S703: the first terminal performs CP removal processing on the signal after the time domain sampling processing.

S704: the first terminal performs time domain DAGC processing on the signal with CP removed.

Exemplarily, by means of the time domain DAGC processing, information amount of the shared signal may be reduced, thus a data size of inter-terminal transmission may be reduced.

S705: the first terminal performs FFT processing and removal of information carried on a frequency domain resource of the first terminal on the signal after the time domain DAGC processing to obtain a shared signal.

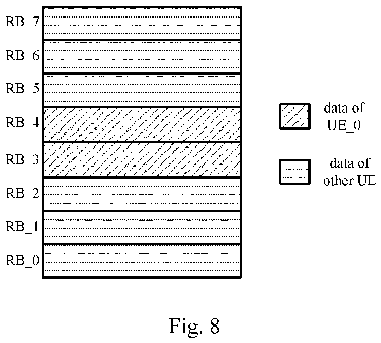

Exemplarily, after performing the FFT processing on the signal after the time domain DAGC processing, the first terminal UE_1 may obtain information carried on a frequency domain resource as shown in Fig. 8. The information carried on the frequency domain resource is identified by a resource block (Resource Block, short for RB), namely a serial number of a frequency domain resource in the embodiment. For example, serial numbers of frequency domain resources allocated to the first terminal UE_1 by a system are RB_3 and RB_4, and information carried on other frequency domain resources is allocated to other terminals, in which information carried on a frequency domain resource allocated to the second terminal UE_0 may be included. After extracting information carried on frequency domain resources of RB_3 and RB_4, the first terminal UE_1 obtains the shared signal, namely, information carried on frequency domain resources respectively corresponding to RB_0, RB_1, RB_2, RB_5, RB_6 and RB_7.

S706: the first terminal sends shared information to a second terminal.

Exemplarily, the shared information includes the shared signal, a DAGC factor of the time domain DAGC processing performed by the first terminal on the signal with CP removed and a serial number of a frequency domain resource corresponding to the shared signal.

S707: the second terminal receives a signal sent by the network side.

S708: the second terminal performs time domain sampling processing on the signal received by the second terminal from the network side.

S709: the second terminal performs CP removal processing on the signal received by the second terminal from the network side after the time domain sampling processing.

S710: the second terminal performs time domain DAGC processing on the signal, with CP removed, received by the second terminal from the network side.

S711: the second terminal performs FFT processing on the signal received by the second terminal from the network side after the DAGC processing.

S712: the second terminal performs DAGC compensation processing on the shared signal according to the DAGC factor of the DAGC processing performed on the signal received by the first terminal from the network side.

S713: the second terminal demodulates the shared signal after the DAGC compensation processing and the signal received by the second terminal from the network side after the FFT processing according to a resource identity allocated by the system to the second terminal.

S714: the second terminal decodes the demodulated shared signal and the demodulated signal received by the second terminal from the network side.

Exemplarily, the second terminal UE_0 obtains the following receiving signal according to obtained channel information:

$$ Y = \begin{bmatrix} Y_0 \\ Y_1 \end{bmatrix} = \begin{bmatrix} H_{00} \\ H_{01} \end{bmatrix} \cdot S_0 + \begin{bmatrix} H_{10} \\ H_{11} \end{bmatrix} \cdot S_1 + \begin{bmatrix} N_0 \\ N_1 \end{bmatrix}. $$

According to a receiver $W_0$ adopted by the second terminal UE_0, an estimated value of S0 sent by the second base station BS_0 may be obtained:

$$ \hat{S}_0 = W_0 \cdot Y. $$

The second terminal UE_0 demodulates $\hat{S}_0$ via $[H_{00}\ H_{01}]^T$ to achieve sharing of the first terminal UE_1, thereby improving a quality of the received signal of the second terminal UE_0.

According to the method for inter-terminal coordinated communication provided by the embodiment of the present invention, the second terminal receives the shared information sent by the first terminal and obtains the information that the network side needs to send to the second terminal according to the shared information and the signal received by the second terminal from the network side. The shared information is obtained by the first terminal after performing the FFT processing on the information received by the first terminal from the network side and removing the information carried on the frequency domain resource of the first terminal. This not only reduces the information amount of the shared signal and reduces the data size of the inter-terminal transmission, but also enables the second terminal to find data needed by itself via an RB serial number according to the resource identity allocated by the system to the second terminal. Problems in the prior art that the network side needs to jointly process a signal sent by the network side which increases a complexity of information processing of the network side, and that a terminal needs to completely demodulate information of other terminals which increases a processing load of the terminal are overcome.

Embodiment 5

The above-mentioned second application scenario is selected for illustration in the embodiment. A principle of the embodiment is same as that of the embodiment 2. A difference is that a manner in which the first terminal UE_1 obtains a shared signal is different, and only the difference is illustrated herein.

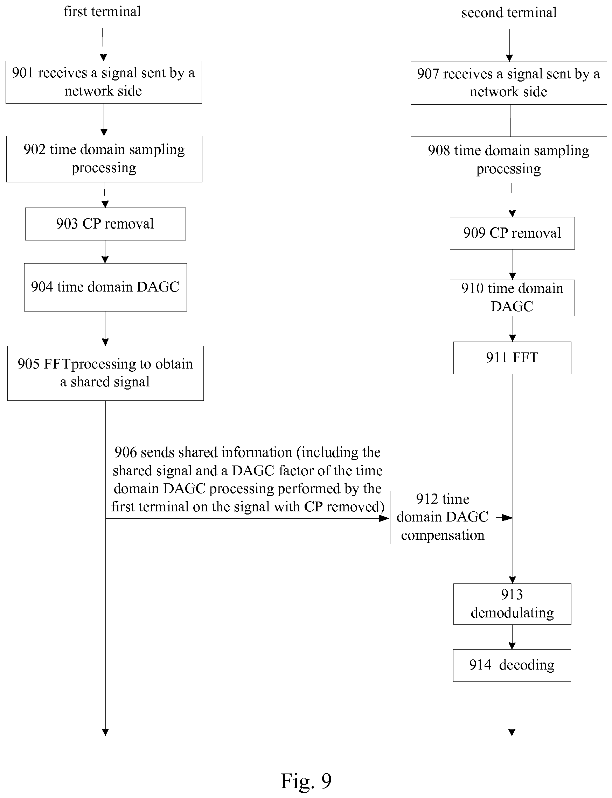

Referring to Fig. 9, the following is included.

S901: the first terminal receives a signal sent by a network side.

S902: the first terminal performs time domain sampling processing on the signal received from the network side.

S903: the first terminal removes CP from the signal after the time domain sampling processing.

S904: the first terminal performs time domain DAGC processing on the signal with CP removed.

Exemplarily, by means of the time domain DAGC processing, information amount of the shared signal may be reduced, thus a data size of inter-terminal transmission may be reduced.

S905: the first terminal performs FFT processing on the signal after the time domain DAGC processing to obtain a shared signal.

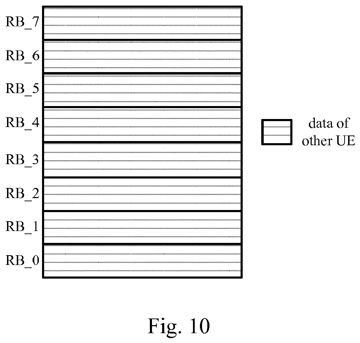

Exemplarily, after performing the FFT processing on the signal after the time domain DAGC processing, the first terminal UE_1 may obtain information carried on a frequency domain resource corresponding to the shared signal, as shown in Fig. 10, namely a serial number of a frequency domain resource in the embodiment. The information carried on the frequency domain resource is identified by RB. All information carried on the frequency domain resource corresponding to the shared signal is information of other terminals, in which information carried on a frequency domain resource allocated to the second terminal UE_0 are included. The shared signal is information carried on all frequency domain resources after the FFT processing, namely, information carried on frequency domain resources respectively corresponding to RB_0, RB_1, RB_2, RB_3, RB_4, RB_5, RB_6, RB_7.

S906: the first terminal sends shared information to the second terminal.

Exemplarily, the shared information includes the shared signal and a DAGC factor of the time domain DAGC processing performed by the first terminal on the signal with CP removed.

S907: the second terminal receives a signal sent by the network side.

S908: the second terminal performs time domain sampling processing on the signal received by the second terminal from the network side.

S909: the second terminal removes CP from the signal after the time domain sampling processing and received by the second terminal from the network side.

S910: the second terminal performs time domain DAGC processing on the signal with CP removed and received by the second terminal from the network side.

S911: the second terminal performs FFT processing on the signal after the DAGC processing and received by the second terminal from the network side.

S912: the second terminal performs DAGC compensation processing on the shared signal according to a DAGC factor of the time domain DAGC processing performed on the signal received by the first terminal from the network side.

S913: the second terminal demodulates the shared signal after the DAGC compensation processing and the signal after the FFT processing and received by the second terminal from the network side according to a resource identity allocated by a system to the second terminal.

S914: the second terminal decodes the demodulated shared signal and the demodulated signal received by the second terminal from the network side.

For example, the second terminal obtains the following receiving signal according to obtained channel information:

$$ Y = \begin{bmatrix} Y_0 \\ Y_1 \end{bmatrix} = \begin{bmatrix} H_{00} \\ H_{01} \end{bmatrix} \cdot S_0 + \begin{bmatrix} N_0 \\ N_1 \end{bmatrix}. $$

According to a receiver $W_0$ adopted by the second terminal UE_0, an estimated value of S0 sent by the second base station BS_0 may be obtained:

$$ \hat{S}_0 = W_0 \cdot Y. $$

The second terminal UE_0 demodulates $\hat{S}_0$ via $[H_{00}\ H_{01}]^T$ to achieve sharing of the first terminal UE_1, thereby improving a quality of the received signal of the second terminal UE_0.

According to the method for inter-terminal coordinated communication provided by the embodiment of the present invention, the second terminal receives the shared information sent by the first terminal and obtains the information that the network side needs to send to the second terminal according to the shared information and the signal received by the second terminal from the network side. The shared information is obtained by the first terminal after performing the FFT processing on the information received by the first terminal from the network side. This not only reduces the information amount of the shared signal and reduces the data size of the inter-terminal transmission, but also enables the second terminal to find data needed by itself via an RB serial number according to the resource identity allocated by the system to the second terminal. Problems in the prior art that the network side needs to jointly process a signal sent by the network side which increases a complexity of information processing of the network side, and that a terminal needs to completely demodulate information of other terminals which increases a processing load of the terminal are overcome.

Embodiment 6

The above-mentioned first application scenario is selected for illustration in the embodiment. A principle of the embodiment is same as that of the embodiment 1. A difference is that a manner in which the first terminal UE_1 obtains a shared signal is different, and only the difference is illustrated herein.

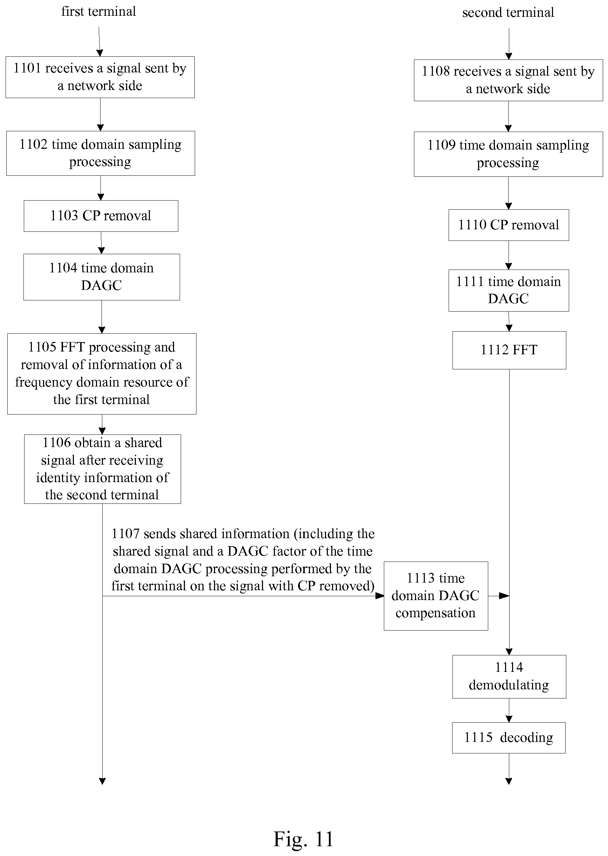

Referring to Fig. 11, the following is included.

S1101: the first terminal receives a signal sent by a network side.

S1102: the first terminal performs time domain sampling processing on the signal received from the network side.

S1103: the first terminal removes CP from the signal after the time domain sampling processing.

S1104: the first terminal performs time domain DAGC processing on the signal with CP removed.

Exemplarily, by means of the time domain DAGC processing, information amount of the shared signal may be reduced, thus a data size of inter-terminal transmission may be reduced.

S1105: the first terminal performs FFT processing on the signal after the time domain DAGC processing and removes information carried on a frequency domain resource of the first terminal.

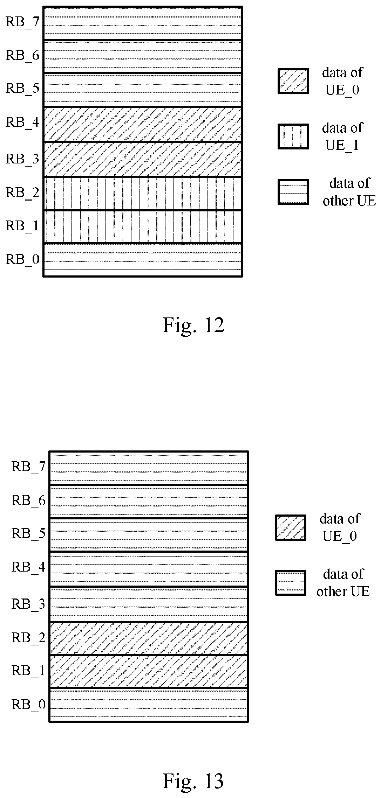

Exemplarily, after performing the FFT processing on the signal after the time domain DAGC processing, the first terminal UE_1 obtains information carried on a frequency domain resource, as shown in Fig. 12. The information carried on the frequency domain resource is identified by RB, namely a serial number of a frequency domain resource in the embodiment. For example, serial numbers of frequency domain resources allocated by a system to the first terminal UE_1 are RB_3 and RB_4, serial numbers of frequency domain resources allocated by the system to the second terminal UE_0 are RBland RB_2, and information carried on other frequency domain resources is allocated to other terminals. The first terminal UE_1 extracts information carried on frequency domain resources of RB_3 and RB_4.

S1106: the first terminal obtains a shared signal after receiving identity information of the second terminal.

Exemplarily, the first terminal obtains a serial number of a frequency domain resource of the second terminal according to the identity information of the second terminal to obtain a signal belonging to the second terminal in the signal after the FFT processing, so as to obtain the shared signal, and the shared signal is information carried on the frequency domain resource corresponding to the second terminal.

Exemplarily, for information carried on other frequency domain resources, according to the identity information of the second terminal UE_0, the first terminal UE_1 may find a position of a time frequency resource where the information carried on the frequency domain resource of the second terminal UE_0 is located. The first terminal UE_1 estimates a quality of the information carried on the frequency domain resources of the second terminal UE_0, namely, the first terminal UE_1 estimates the quality of information carried on frequency domain resources corresponding to RB_1 and RB_2 of the second terminal UE_0. If the quality of the information carried on the frequency domain resources corresponding to RB_1 and RB_2 is less than a preset threshold, there is no shared signal, because the UE_1 obtains information carried on a frequency domain resource with a low quality, and a quality of the received signal cannot be improved.

Exemplarily, if the quality of the information carried on the frequency domain resources corresponding to RB_1 and RB_2 is greater than or equal to the preset threshold, the information carried on the frequency domain resources corresponding to RB_1 and RB_2 of the second terminal UE_0 is the shared signal.

Exemplarily, the preset threshold is determined according to a signal-noise ratio threshold corresponding to a modulating and coding solution adopted by the second terminal UE_0. The second terminal UE_0 may look up a signal-noise ratio threshold table corresponding to a channel quality indicator (Channel Quality Indicator, short for CQI) feedback to obtain the signal-noise ratio threshold. The signal-noise ratio threshold table is determined by specific implementation of a terminal manufacturer.

S1107: the first terminal sends shared information to the second terminal.

Exemplarily, when the signal quality of the shared signal is less than the preset threshold, the first terminal does not send the shared information to the second terminal.

Or,

when the signal quality of the shared signal is greater than or equal to the preset threshold, the first terminal sends the shared information to the second terminal.

Exemplarily, the shared information includes the shared signal and a DAGC factor of the time domain DAGC processing performed by the first terminal on the signal with CP removed.

Exemplarily, the shared information includes the shared signal and a DAGC factor of the time domain DAGC processing performed by the first terminal on the signal with CP removed.

S1108: the second terminal receives a signal sent by the network side.

S1109: the second terminal performs time domain sampling processing on the signal received by the second terminal from the network side.

S1110: the second terminal removes CP from the signal after the time domain sampling processing and received by the second terminal from the network side.

S1111: the second terminal performs time domain DAGC processing on the signal with CP removed and received by the second terminal from the network side.

S1112: the second terminal performs FFT processing on the signal after the DAGC processing and received by the second terminal from the network side.

S1113: the second terminal performs DAGC compensation processing on the shared signal according to the DAGC factor of the time domain DAGC processing performed on the signal received by the first terminal from the network side.

S1114: the second terminal demodulates the shared signal after the DAGC compensation processing and the signal after the FFT processing and received by the second terminal from the network side according to a resource identity allocated by the system to the second terminal.

S1115: the second terminal decodes the demodulated shared signal and the demodulated signal received by the second terminal from the network side.

Exemplarily, the second terminal UE_0 obtains the following receiving signal according to obtained chan-

nel information:

$$Y = \begin{bmatrix} Y_0 \\ Y_1 \end{bmatrix} = \begin{bmatrix} H_{00} \\ H_{01} \end{bmatrix} \cdot S_0 + \begin{bmatrix} H_{10} \\ H_{11} \end{bmatrix} \cdot S_1 + \begin{bmatrix} N_0 \\ N_1 \end{bmatrix}.$$

According to a receiver $W_0$ adopted by the second terminal UE_0, an estimated value of S0 sent by the second base station BS_0 may be obtained:

$$\hat{S}_0 = W_0 \cdot Y.$$

The second terminal UE_0 demodulates $\hat{S}_0$ via $[H_{00} \ H_{01}]^T$ to achieve sharing of the first terminal UE_1, thereby improving a quality of the received signal of the second terminal UE_0.

According to the method for inter-terminal coordinated communication provided by the embodiment of the present invention, the second terminal receives the shared information sent by the first terminal and obtains the information that the network side needs to send to the second terminal according to the shared information and the signal received by the second terminal from the network side. The shared information is obtained by the first terminal after performing the FFT processing on the information received by the first terminal from the network side. This reduces the information amount of the shared signal, thus reduces the data size of the inter-terminal transmission. Problems in the prior art that the network side needs to jointly process a signal sent by the network side which increases a complexity of information processing of the network side, and that a terminal needs to completely demodulate information of other terminals which increases a processing load of the terminal are overcome.

Embodiment 7

The above-mentioned second application scenario is selected for illustration in the embodiment. A principle of the embodiment is same as that of the embodiment 2. A difference is that a manner in which the first terminal UE_1 obtains a shared signal is different, and only the difference is illustrated herein.

Referring to Fig. 11, the following is included.

S1101: the first terminal receives a signal sent by a network side.

S1102: the first terminal performs time domain sampling processing on the signal received from the network side.

S1103: the first terminal removes CP from the signal after the time domain sampling processing.

S1104: the first terminal performs time domain DAGC processing on the signal with CP removed.

Exemplarily, by means of the time domain DAGC processing, information amount of the shared signal may be reduced, thus a data size of inter-terminal transmission may be reduced.

S1105: the first terminal performs FFT processing on the signal after the time domain DAGC processing.

Exemplarily, after performing the FFT processing on the signal after the time domain DAGC processing, the first terminal UE_1 obtains information carried on a frequency domain resource, as shown in Fig. 13. The information carried on the frequency domain resource is identified by RB, namely a serial number of a frequency domain resource in the embodiment. For example, serial numbers of frequency domain resources allocated by a system to the second terminal UE_0 are RB_1 and RB_2, and information carried on other frequency domain resources is allocated to other terminals.

S1106: the first terminal obtains a shared signal after receiving identity information of the second terminal.

Exemplarily, the first terminal UE_1 obtains a serial number of a frequency domain resource of the second terminal UE_0 according to the identity information of the second terminal UE_0 to obtain a signal belonging to the second terminal UE_0 in the signal after the FFT processing, so as to obtain the shared signal, and the shared signal is information carried on the frequency domain resource corresponding to the second terminal UE_0.

Exemplarily, for information carried on other frequency domain resources, according to the identity information of the second terminal UE_0, the first terminal UE_1 may find a position of a frequency domain resource where the information carried on the frequency domain resource of the second terminal UE_0 is located. The first terminal UE_1 estimates a quality of the information carried on the frequency domain resources of the second terminal UE_0, namely, the first terminal UE_1 estimates the quality of information carried on frequency domain resources corresponding to RB_1 and RB_2 of the second terminal UE_0. If the quality of the information carried on the frequency domain resources corresponding to RB_1 and RB_2 is less than a preset threshold, there is no shared signal, because the UE_1 obtains information carried on a frequency domain resource with a low quality, and a quality of the received signal cannot be improved.

Exemplarily, if the quality of the information carried on the frequency domain resources corresponding to RB_1 and RB_2 is greater than or equal to the preset threshold, the information carried on the frequency domain resources corresponding to RB_1 and RB_2 of the second terminal UE_0 is the shared signal.

Exemplarily, the preset threshold is determined according to a signal-noise ratio threshold corresponding to a modulating and coding solution adopted by the second terminal UE_0. The second terminal UE_0 may look up a signal-noise ratio threshold table corresponding to a channel quality indicator (Channel Quality Indicator, short for CQI) feedback to obtain the signal-noise ratio threshold. The signal-noise ratio threshold table is determined by specific implementation of a terminal manufacturer.

S1107: the first terminal sends the shared information to the second terminal.

Exemplarily, when the signal quality of the shared signal is less than the preset threshold, the first terminal does not send the shared information to the second terminal.

Or,

when the signal quality of the shared signal is greater than or equal to the preset threshold, the first terminal sends the shared information to the second terminal.

Exemplarily, the shared information includes the shared signal and a DAGC factor of the time domain DAGC processing performed by the first terminal on the signal with CP removed.

S1108: the second terminal receives a signal sent by the network side.

S1109: the second terminal performs time domain sampling processing on the signal received by the second terminal from the network side.

S1110: the second terminal removes CP from the signal after the time domain sampling processing and received by the second terminal from the network side.

S1111: the second terminal performs time domain DAGC processing on the signal with CP removed and received by the second terminal from the network side.

S1112: the second terminal performs FFT processing on the signal after the DAGC processing and received by the second terminal from the network side.

S1113: the second terminal performs DAGC compensation processing on the shared signal according to the DAGC factor of the time domain DAGC processing performed on the signal received by the first terminal from the network side.

S1114: the second terminal demodulates the shared signal after the DAGC compensation processing and the signal after the FFT processing and received by the second terminal from the network side according to a resource identity allocated by the system to the second terminal.

S1115: the second terminal decodes the demodulated shared signal and the demodulated signal received by the second terminal from the network side.

For example, the second terminal obtains the following receiving signal according to obtained channel information:

$$Y = \begin{bmatrix} Y_0 \\ Y_1 \end{bmatrix} = \begin{bmatrix} H_{00} \\ H_{01} \end{bmatrix} \cdot S_0 + \begin{bmatrix} N_0 \\ N_1 \end{bmatrix}.$$

According to a receiver $W_0$ adopted by the second terminal UE_0, an estimated value of S0 sent by the second base station BS_0 may be obtained:

$$\hat{S}_0 = W_0 \cdot Y.$$

The second terminal UE_0 demodulates $\hat{S}_0$ via $[H_{00} \, H_{01}]^T$ to achieve sharing of the first terminal UE_1, thereby improving a quality of the received signal of the second terminal UE_0.

According to the method for inter-terminal coordinated communication provided by the embodiment of the present invention, the second terminal receives the shared information sent by the first terminal and obtains the information that the network side needs to send to the second terminal according to the shared information and the signal received by the second terminal from the network side. The shared information is obtained by the first terminal after performing the FFT processing on the information received by the first terminal from the network side. This reduces the information amount of the shared signal, thus reduces the data size of the inter-terminal transmission. Problems in the prior art that the network side needs to jointly process a signal sent by the network side which increases a complexity of information processing of the network side, and that a terminal needs to completely demodulate information of other terminals which increases a processing load of the terminal are overcome.

Embodiment 8

The above-mentioned first application scenario is selected for illustration in the embodiment. A principle of the embodiment is same as that of the embodiment 1. A difference is that a manner in which the first terminal UE_1 obtains a shared signal is different, and only the difference is illustrated herein.

Referring to Fig. 9, the following is included.

S901: the first terminal receives a signal sent by a network side.

S902: the first terminal performs time domain sampling processing on the signal received from the network side.

S903: the first terminal removes CP from the signal after the time domain sampling processing.

S904: the first terminal performs time domain DAGC processing on the signal with CP removed.

Exemplarily, by means of the time domain DAGC processing, information amount of the shared signal may be reduced, thus a data size of inter-terminal transmission may be reduced.

S905: the first terminal performs FFT processing on the signal after the time domain DAGC processing to obtain a shared signal.

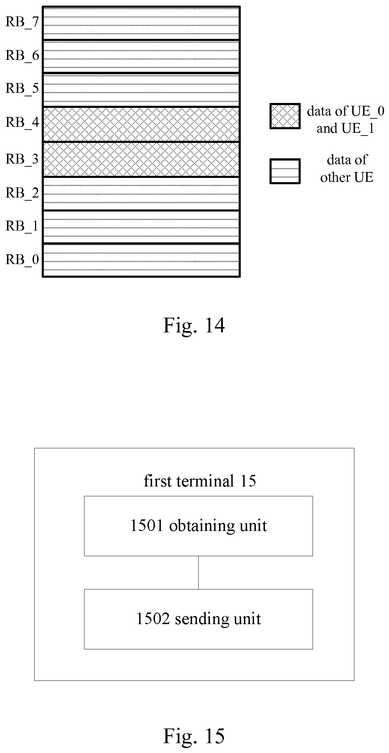

Exemplarily, after performing the FFT processing on the signal after the time domain DAGC processing, the first terminal UE_1 may obtain information carried on a frequency domain resource, as shown in Fig. 14, namely a serial number of a frequency domain resource in the embodiment. The information carried on the frequency domain resource is identified by RB. For example, information carried on frequency domain resources allocated by a system to the first terminal UE_1 is RB_3 and RB_4, meanwhile, by means of a spatial multiplexing technology, the information RB_3 and RB_4 carried on the frequency domain resources is allocated to the second terminal UE_0, namely information carried on frequency domain resources of the second terminal UE_0 and the first terminal UE_1 is carried on a same frequency domain resource block, and information carried on other frequency domain resources is information of other terminals. The shared signal is information carried on all frequency domain resources after the FFT processing, namely, information carried on frequency domain resources respectively corresponding to RB_0, RB_1, RB_2, RB_3, RB_4, RB_5, RB_6, RB_7.

S906: the first terminal sends shared information to the second terminal.

Exemplarily, the shared information includes the shared signal and a DAGC factor of the time domain DAGC processing performed by the first terminal on the signal with CP removed.

S907: the second terminal receives a signal sent by the network side.

S908: the second terminal performs time domain sampling processing on the signal received by the second terminal from the network side.

S909: the second terminal removes CP from the signal after the time domain sampling processing and received by the second terminal from the network side.

S910: the second terminal performs time domain DAGC processing on the signal with CP removed and received by the second terminal from the network side.

S911: the second terminal performs FFT processing on the signal after the DAGC processing and received by the second terminal from the network side.

S912: the second terminal performs DAGC compensation processing on the shared signal according to a DAGC factor of the time domain DAGC processing performed on the signal received by the first terminal from the network side.

S913: the second terminal demodulates the shared signal after the DAGC compensation processing and the signal after the FFT processing and received by the second terminal from the network side according to a resource identity allocated by the system to the second terminal.

S914: the second terminal decodes the demodulated shared signal and the demodulated signal received by the second terminal from the network side.

For example, the second terminal obtains the following receiving signal according to obtained channel information:

$$Y = \begin{bmatrix} Y_0 \\ Y_1 \end{bmatrix} = \begin{bmatrix} H_{00} \\ H_{01} \end{bmatrix} \cdot S_0 + \begin{bmatrix} H_{10} \\ H_{11} \end{bmatrix} \cdot S_1 + \begin{bmatrix} N_0 \\ N_1 \end{bmatrix}.$$

According to a receiver $W_0$ adopted by the second terminal UE_0, an estimated value of S0 sent by the second base station BS_0 may be obtained:

$$\hat{S}_0 = W_0 \cdot Y.$$

The second terminal UE_0 demodulates $\hat{S}_0$ via $[H_{00}\ H_{01}]^T$ to achieve sharing of the first terminal UE_1, thereby improving a quality of the received signal of the second terminal UE_0.

According to the method for inter-terminal coordinated communication provided by the embodiment of the present invention, the second terminal receives the shared information sent by the first terminal and obtains the information that the network side needs to send to the second terminal according to the shared information and the signal received by the second terminal from the network side. The shared information is obtained by the first terminal after performing the FFT processing on the information received by the first terminal from the network side, This not only reduces the information amount of the shared signal and reduces the data size of the inter-terminal transmission, but also enables the second terminal to find data needed by itself via an RB serial number according to the resource identity allocated by the system to the second terminal. Problems in the prior art that the network side needs to jointly process a signal sent by the network side which increases a complexity of information processing of the network side, and that a terminal needs to completely demodulate information of other terminals which increases a processing load of the terminal are overcome.

Fig. 15 is an apparatus schematic diagram of a first terminal 15 provided by an embodiment of the present invention. Referring to the figure, the first terminal 15 includes:

an obtaining unit 1501, configured to obtain a shared signal according to a signal received by the first terminal 15 from a network side, and transmit the shared signal to a sending unit 1502; and the sending unit 1502, configured to send shared information to a second terminal, for enabling the second terminal to obtain information that the network side needs to send to the second terminal according to the shared information and a signal received by the second terminal from the network side, where the shared information includes the shared signal.

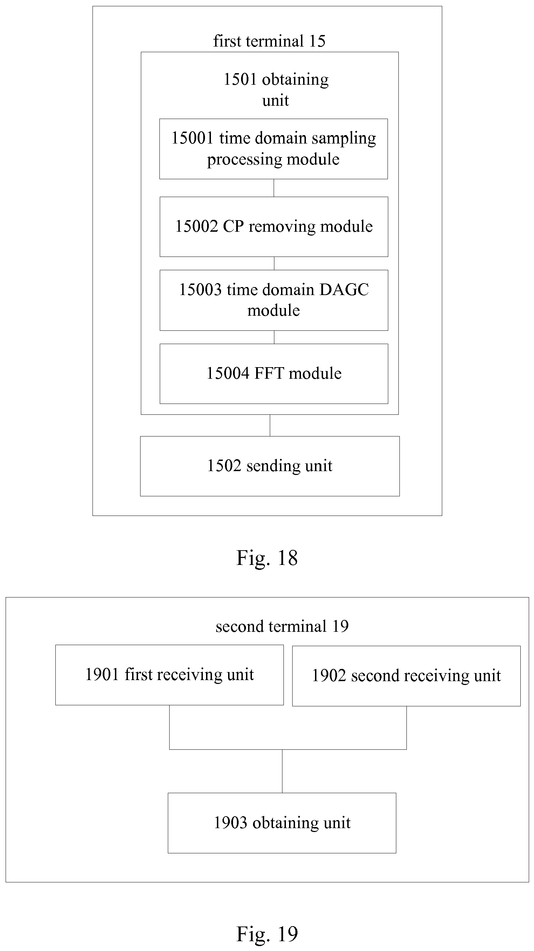

Further, referring to Fig. 18, the obtaining unit 1501 may include:

a time domain sampling processing module 15001, configured to perform time domain sampling processing on the signal received by the first terminal from the network side to obtain the shared signal; a CP removing module 15002, configured to remove a cyclic prefix (CP) from a signal processed by the time domain sampling processing module; and a time domain DAGC module 15003, configured to perform time domain digital automatic gain control (DAGC) processing on a signal processed by the CP removing module to obtain the shared signal; and the shared information further includes a DAGC factor of the time domain DAGC processing performed by the first terminal on the signal received by the first terminal from the network side.

An FFT module 15004 is configured to perform fast Fourier transform (FFT) and removal of information carried on a frequency domain resource of the first terminal on the signal processed by the time domain DAGC module to obtain the shared signal; and the shared information further includes a DAGC factor of the time domain DAGC processing performed by the first terminal on the signal received by the first terminal from the network side and a serial number of a frequency domain resource corresponding to the shared signal.

The FFT module 15004 is further configured to perform FFT on a signal processed by the time domain DAGC module to obtain the shared signal; and

the shared information further includes a DAGC factor of the time domain DAGC processing performed by the first terminal on the signal received by the first terminal from the network side.

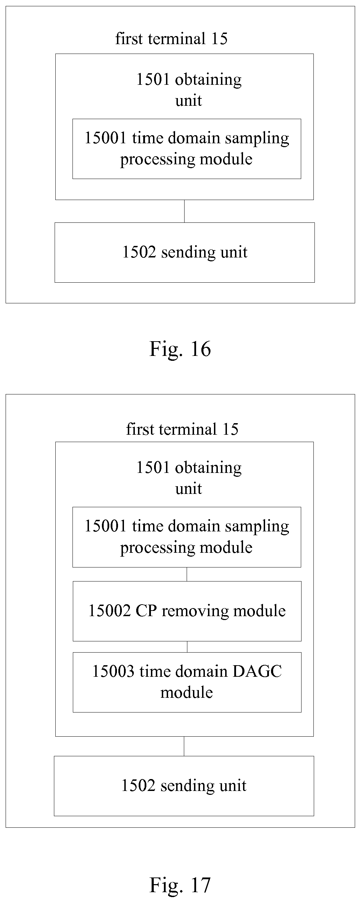

Exemplarily, referring to Fig. 16 to Fig. 18, the obtaining unit 1501 in the embodiment of the present invention may only include the time domain sampling processing module 15001; or the obtaining unit 1501 may include the time domain sampling processing module 15001, the CP removing module 15002 and the time domain DAGC module 15003; or the obtaining unit 1501 includes the time domain sampling processing module 15001, the CP removing module 15002, the time domain DAGC module 15003 and the FFT module 15004.

According to an inter-terminal coordinated communication device provided by the embodiment of the present invention, the first terminal 15 obtains the shared signal according to the signal received by the first terminal 15 from the network side. The first terminal 15 sends the shared information to the second terminal, for enabling the second terminal to obtain the information that the network side needs to send to the second terminal according to the shared information and the signal received by the second terminal from the network side. The shared information includes the shared signal. Problems in the prior art that the network side needs to jointly process a signal sent by the network side which increases a complexity of information processing of the network side, and that a terminal needs to completely demodulate information of other terminals which increases a processing load of the terminal are overcome.

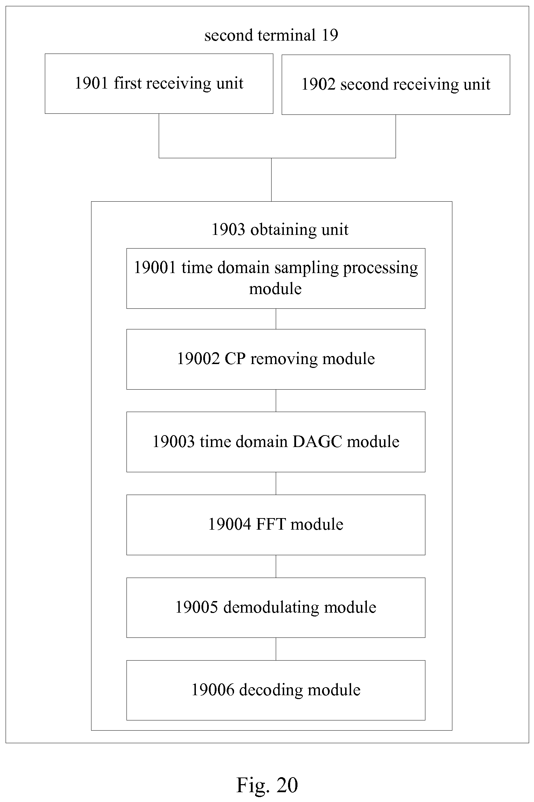

Fig. 19 or Fig. 20 is a schematic diagram of a coordinated communication device of a second terminal side. Referring to Fig. 19 or Fig. 20, a second terminal 19 includes:

a first receiving unit 1901, configured to receive shared information sent by a first terminal and transmit the shared information to an obtaining unit 1903, where the shared information includes a shared signal obtained by the first terminal according to a signal received by the first terminal from a network side;

a second receiving unit 1902, configured to receive a signal from the network side and transmit the signal to the obtaining unit 1903; and

the obtaining unit 1903, configured to obtain information that the network side needs to send to the second terminal 19 according to the shared information and the signal received by the second receiving unit 1902 from the network side.

Exemplarily, the information that the network side needs to send to the second terminal 19 includes information of the second terminal 19 in the shared signal and information of the second terminal 19 received by the second terminal 1902.

Exemplarily, the obtaining unit 1903 may include:

a time domain sampling processing module 19001, configured to perform time domain sampling processing on the signal received by the second receiving unit 1902 from the network side;

a CP removing module 19002, configured to perform cyclic prefix (CP) removal processing on the shared signal and a signal processed by the time domain sampling processing module 18001 and received by the second receiving unit 1902 from the network side;

the CP removing module 19002 is further configured to perform cyclic prefix (CP) removal processing on a signal processed by the time domain sampling processing module 19002;

a time domain DAGC module 19003, configured to perform time domain DAGC processing on a signal processed by the CP removing module 19002;

an FFT module 19004, configured to perform FFT processing on a signal processed by the time domain DAGC module 19003;

a demodulating module 19005, configured to demodulate a signal processed by the FFT module 19004; and

a decoding module 19006, configured to decode a signal processed by the demodulating module 19005 to obtain the information that the network side needs to send to the second terminal 19.

Exemplarily,

the shared signal is obtained by the first terminal after performing time domain sampling processing, CP removal and time domain DAGC processing in turn on the signal received by the first terminal from the network side; the shared information further includes a DAGC factor of the time domain DAGC processing performed by the first terminal on the signal received by the first terminal from the network side; and

the obtaining unit 1903 may include:

a time domain sampling processing module 19001, configured to perform time domain sampling processing on the signal received by the second receiving unit from the network side;

a CP removing module 19002, configured to perform cyclic prefix (CP) removal processing on a signal processed by the time domain sampling processing module 19001;

a time domain DAGC module 19003, configured to perform DAGC compensation processing on the shared signal according to the DAGC factor of the time domain DAGC processing performed on the signal received by the first terminal from the network side, and perform time domain DAGC processing on a signal processed by the CP removing module 19002;

an FFT module 19004, configured to perform FFT processing on the shared signal and a signal processed by the time domain DAGC module 19003;

a demodulating module 19005, configured to demodulate a signal processed by the FFT module 19004; and

a decoding module 19006, configured to decode a signal processed by the demodulating module 19005 to obtain the information that the network side needs to send to the second terminal 19.

Exemplarily,
the shared signal is obtained by the first terminal after performing time domain sampling processing, CP removal, time domain DAGC, FFT and removal of information carried on a frequency domain resource of the first terminal in turn on the signal received by the first terminal from the network side; the shared information further includes a DAGC factor of the time domain DAGC processing performed by the first terminal on the signal received by the first terminal from the network side and a serial number of a frequency domain resource corresponding to the shared signal; and
the obtaining unit 1903 may include:

a time domain sampling processing module 19001, configured to perform time domain sampling processing on the signal received by the second receiving unit 1902 from the network side;

a CP removing module 19002, configured to perform cyclic prefix (CP) removal processing on a signal processed by the time domain sampling processing module 19001;

a time domain DAGC module 19003, configured to perform DAGC compensation processing on the shared signal according to the DAGC factor of the time domain DAGC processing performed on the signal received by the first terminal from the network side, and perform time domain DAGC processing on a signal processed by the CP removing module 19002;

an FFT module 19004, configured to perform FFT processing on a signal processed by the time domain DAGC module 18003;

a demodulating module 19005, configured to demodulate the signal processed by the FFT module 19004 according to the serial number of the frequency domain resource corresponding to the shared signal; and

a decoding module 19006, configured to decode a signal processed by the demodulating module 19005 to obtain the information that the network side needs to send to the second terminal 19.

Exemplarily,
the shared signal is obtained by the first terminal after performing time domain sampling processing, CP removal, time domain DAGC and FFT in turn on the signal received by the first terminal from the network side; the shared information further includes a DAGC factor of the time domain DAGC processing performed by the first terminal on the signal received by the first terminal from the network side; and
the obtaining unit 1903 further includes:

a time domain sampling processing module 19001, configured to perform time domain sampling processing on the signal received by the second receiving unit 1902 from the network side;

a CP removing module 19002, configured to perform cyclic prefix (CP) removal processing on a signal processed by the time domain sampling processing module 19001;

a time domain DAGC module 19003, configured to perform DAGC compensation processing on the shared signal according to the DAGC factor of the time domain DAGC processing performed on the signal received by the first terminal from the network side, and perform time domain DAGC processing on a signal processed by the CP removing module 19002;

an FFT module 19004, configured to perform FFT processing on a signal processed by the time domain DAGC module 19003;

a demodulating module 19005, configured to demodulate a signal processed by the FFT module 19004 according to a serial number of a frequency domain resource allocated by a system and corresponding to the second terminal 19; and

a decoding module 19006, configured to decode a signal processed by the demodulating module 19005 to obtain the information that the network side needs to send to the second terminal.

Exemplarily, the second terminal 19 may further include:

a sending unit 1904, configured to send identity information of the second terminal 19 to the first terminal, so that the first terminal performs time domain sampling processing, CP removal, time domain DAGC and FFT in turn on the signal received by the first terminal from the network side, obtains the shared signal according to the identity information of the second terminal 19 and obtains a signal quality of the shared signal; and does not send the shared information to the second terminal 19 when the signal quality of the shared signal is less than a preset threshold, or sends the shared information to the second terminal 19 when the signal quality of the shared signal is greater than or equal to the preset threshold, where the shared signal includes information carried on a frequency domain resource corresponding to the second terminal 19.

Exemplarily,

the shared information further includes a DAGC factor of the time domain DAGC processing performed by the first terminal on the signal received by the first terminal from the network side; and

the obtaining unit 1903 may include:

a time domain sampling processing module 19001, configured to perform time domain sampling processing on the signal received by the second receiving unit 1902 from the network side;

a CP removing module 19002, configured to perform cyclic prefix (CP) removal processing on a signal processed by the time domain sampling processing module 19001;

a time domain DAGC module 19003, configured to perform DAGC compensation processing on the shared signal according to the DAGC factor of the time domain DAGC processing performed on the signal received by the first terminal from the network side, and perform time domain DAGC processing on a signal processed by the CP removing module 19002;

an FFT module 19004, configured to perform FFT processing on a signal processed by the time domain DAGC module 19003;

a demodulating module 19005, configured to demodulate a signal processed by the FFT module 19004 according to information carried on a frequency domain resource corresponding to the shared signal; and

a decoding module 19006, configured to decode a signal processed by the demodulating module 19005 to obtain the information that the network side needs to send to the second terminal 19.

The sending unit 1904 is configured to send identity information of the second terminal 19 to the first terminal, so that the first terminal performs time domain sampling processing, CP removal, time domain DAGC and FFT in turn on the signal received by the first terminal from the network side, obtains the shared signal according to the identity information of the second terminal 19 and obtains a signal quality of the shared signal; and does not send the shared information to the second terminal 19 when the signal quality of the shared signal is less than a preset threshold, or sends the shared information to the second terminal 19 when the signal quality of the shared signal is greater than or equal to the preset threshold, where the shared signal includes information carried on a frequency domain resource corresponding to the second terminal 19.

According to an inter-terminal coordinated communication device provided by the embodiment of the present invention, the second terminal 19 receives the shared information sent by the first terminal, so that the second terminal 19 obtains the information that the network side needs to send to the second terminal 19 according to the shared information and the signal received by the second terminal 19 from the network side. The shared information includes the shared signal. Problems in the prior art that the network side needs to jointly process a signal sent by the network side which increases a complexity of information processing of the network side, and that a terminal needs to completely demodulate information of other terminals which increases a processing load of the terminal are overcome.

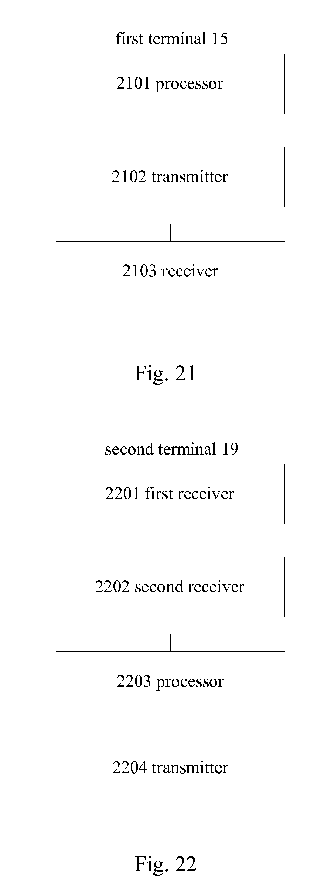

Fig. 21 is an apparatus schematic diagram of a first terminal provided by an embodiment of the present invention. Referring to the figure, the first terminal 15 includes:

a processor 2101, configured to obtain a shared signal according to a signal received by the first terminal 15 from a network side, and transmit the shared signal to a sending unit 2102; and

a transmitter 2102, configured to send shared information to a second terminal, for enabling the second terminal to obtain information that the network side needs to send to the second terminal according to the shared information and a signal received by the second terminal from the network side, where the shared information includes the shared signal.

Exemplarily, the processor 2101 may be further configured to:

perform time domain sampling processing on the signal received by the first terminal 15 from the network side to obtain the shared signal.

Exemplarily, the processor 2101 may be further configured to:

perform time domain sampling processing, cyclic prefix (CP) removal and time domain digital automatic gain control (DAGC) processing in turn on the signal received by the first terminal 15 from the network side to obtain the shared signal; and
the shared information further includes a DAGC factor of the time domain DAGC processing performed by the first terminal 15 on the signal received by the first terminal 15 from the network side and a serial number of a frequency domain resouce corresponding to the shared signal.

Exemplarily, the processor 2101 may be further configured to:

perform time domain sampling processing, CP removal, time domain DAGC processing, fast Fourier transform (FFT) and removal of information carried on a frequency domain resource of the first terminal 15 in turn on the signal received by the first terminal 15 from the network side to obtain the shared signal; and
the shared information further includes a DAGC factor of the time domain DAGC processing performed by the first terminal 15 on the signal received by the first terminal 15 from the network side and a serial number of a frequency domain resource corresponding to the shared signal.

Exemplarily, the processor 2101 may be further configured to:

perform time domain sampling processing, CP removal, time domain DAGC processing and fast Fourier transform (FFT) processing in turn on the signal received by the first terminal 15 from the network side to obtain the shared signal; and
the shared information further includes a DAGC factor of the time domain DAGC processing performed by the first terminal on the signal received by the first terminal from the network side.

Exemplarily, the first terminal 15 may further include:

a receiver 2103, configured to receive identity information of the second terminal; and

the processor 2101 may be further configured to:
obtain the shared signal according to the identity information of the second terminal, where the shared signal includes information carried on a frequency domain resource corresponding to the second terminal.

Exemplarily,
the processor 2101 may be further configured to obtain a signal quality of the shared signal; and
the transmitter 2102 may be further configured to enable the first terminal 15 not to send the shared information to the second terminal, when the signal quality of the shared signal is less than a preset threshold;
or, enable the first terminal 15 to send the shared information to the second terminal, when the signal quality of the shared signal is greater than or equal to the preset threshold.

According to an inter-terminal coordinated communication system provided by the embodiment of the present invention, the first terminal 15 obtains the shared signal according to the signal received by the first terminal 15 from the network side. The first terminal 15 sends the shared information to the second terminal, for enabling the second terminal to obtain the information that the network side needs to send to the second terminal according to the shared information and the signal received by the second terminal from the network side. The shared information includes the shared signal. Problems in the prior art that the network side needs to jointly process a signal sent by the network side which increases a complexity of information processing of the network side, and that a terminal needs to completely demodulate information of other terminals which increases a processing load of the terminal are overcome.

Fig. 22 is an apparatus schematic diagram of a second terminal provided by an embodiment of the present invention. Referring to the figure, the second terminal 19 includes:

a first receiver 2201, configured to receive shared information sent by a first terminal and transmit the shared information to a processor 2203, where the shared information includes a shared signal obtained by the first terminal according to a signal received by the first terminal from a network side;
a second receiver 2202, configured to receive a signal from the network side and transmit the signal to the obtaining unit 2203; and
the processor 2203, configured to obtain information that the network side needs to send to the second terminal 19 according to the shared information and the signal received by the second receiving unit 2202 from the network side.

Exemplarily, the information that the network side needs to send to the second terminal 19 includes information of the second terminal 19 in the shared signal and information of the second terminal 19 received by the second terminal 19.

Exemplarily,
the shared signal is obtained by the first terminal after performing time domain sampling processing on the signal received by the first terminal from the network side; and
the processor 2203 may be further configured to:
perform CP removal, time domain DAGC processing, fast Fourier transform FFT, demodulating and decoding in turn on the shared signal to obtain information of the second terminal 19 in the shared signal; perform time domain sampling processing, CP removal, time domain DAGC processing, FFT, demodulating and decoding in turn on the signal received by the second terminal from the network side to obtain information of the second terminal 19 received by the second terminal 19.

Exemplarily,

the shared signal is obtained by the first terminal after performing time domain sampling processing, CP removal and time domain DAGC processing in turn on the signal received by the first terminal from the network side; the shared information further includes a DAGC factor of the time domain DAGC processing performed by the first terminal on the signal received by the first terminal from the network side; and

the processor 2203 may be further configured to: perform DAGC compenstaion processing on the shared signal according to the DAGC factor of the time domain DAGC processing performed on the signal received by the first terminal from the network side, and perform FFT, demodulating and decoding in turn on the processed shared signal to obtain information of the second terminal 19 in the shared signal; perform time domain sampling processing, CP removal, time domain DAGC, FFT, demodulating and decoding in turn on the signal received by the second terminal 19 from the network side to obtain information of the second terminal 19 received by the second terminal 19.

Exemplarily,

the shared signal is obtained by the first terminal after performing time domain sampling processing, CP removal, time domain DAGC, and FFT and removal of information carried on a frequency domain resource of the first terminal in turn on the signal received by the first terminal from the network side; the shared information further includes a DAGC factor of the time domain DAGC processing performed by the first terminal on the signal received by the first terminal from the network side and a serial number of a frequency domain resource corresponding to the shared signal; and

the processor 2203 may be further configured to: perform DAGC compensation processing on the shared signal according to the DAGC factor of the time domain DAGC processing performed on the signal received by the first terminal from the network side, and perform demodulating and decoding in turn on the processed shared signal according to the serial number of the frequency domain resource corresponding to the shared signal to obtain information of the second terminal in the shared signal; perform time domain sampling processing, CP removal, time domain DAGC, FFT, demodulating and decoding in turn on the signal received by the second terminal 19 from the network side to obtain information of the second terminal received by the second terminal 19.

Exemplarily,

the shared signal is obtained by the first terminal after performing time domain sampling processing, CP removal, time domain DAGC and FFT in turn on the signal received by the first terminal from the network side; the shared information further includes a DAGC factor of the time domain DAGC processing performed by the first terminal on the signal received by the first terminal from the network side; and

the processor 2203 may be further configured to: obtain information carried on a frequency domain resource of the second terminal 19 according to a serial number of the frequency domain resource allocated by a system and corresponding to the second terminal 19, perform DAGC compensation processing on the information carried on the frequency domain resource of the second terminal 19 according to the DAGC factor of the time domain DAGC processing performed on the signal received by the first terminal from the network side, perform demodulating and decoding in turn on the processed information carried on the frequency domain resource of the second terminal 19 to obtain information of the second terminal 19 in the shared signal; perform time domain sampling processing, CP removal, time domain DAGC, FFT, demodulating and decoding in turn on the signal received by the second terminal 19 from the network side to obtain information of the second terminal 19 received by the second terminal 19.

Exemplarily, the second terminal 19 may further include:

a transmitter 2204, configured to send identity information of the second terminal 19 to the first terminal, so that the first terminal performs time domain sampling processing, CP removal, time domain DAGC and FFT in turn on the signal received by the first terminal from the network side, obtains the shared signal according to the identity information of the second terminal 19 and obtains a signal quality of the shared signal; and does not send the shared information to the second terminal 19 when the signal quality of the shared signal is less than a preset threshold, or sends the shared information to the second terminal 19 when the signal quality of the shared signal is greater than or equal to the preset threshold, where the shared signal includes information carried on a frequency domain resource corresponding to the second terminal 19.

Exemplarily,

the shared information further includes a DAGC factor of the time domain DAGC processing performed by the first terminal on the signal received by the first terminal from the network side; and

the processor 2203 may be further configured to: perform DAGC compensation processing on the shared signal according to the DAGC factor of the time domain DAGC processing performed on the signal received by the first terminal from the network side, perform demodulating and decoding in turn on the processed shared signal to obtain information of the second terminal 19 in the shared signal; perform time domain sampling processing, CP removal, time domain DAGC, FFT, demodulating and decoding in turn on the signal received by the second terminal 19 from the network side to obtain information of the second terminal 19 received by the second terminal 19.

According to an inter-terminal coordinated communication system provided by the embodiment of the present invention, the second terminal 19 receives the shared information sent by the first terminal, so that the second terminal 19 obtains the information that the network side needs to send to the second terminal 19 according to the shared information and the signal received by the second terminal 19 from the network side. The shared information includes the shared signal. Problems in the prior art that the network side needs to jointly process a signal sent by the network side which increases a complexity of information processing of the network side, and that a terminal needs to completely demodulate information of other terminals which increases a processing load of the terminal are overcome.

Those of ordinary skill in the art may understand that all or a part of the steps in the above-mentioned method embodiments may be implemented by a program instructing corresponding hardware, the foregoing program may be stored in a computer readable storage medium, and when being executed, the program may execute the steps of the above-mentioned method embodiments; the foregoing storage medium includes various kinds of medium that may store program codes, such as ROM, RAM, a magnetic disk or an optical disk, etc.

The foregoing descriptions are merely related to specific embodiments of the present invention, rather than limiting the present invention.

## Claims

1. A method for inter-terminal coordinated communication performed by a terminal, comprising:

   obtaining (101) a shared signal according to a signal received by the terminal from a network side; and
   sending (102) shared information which comprises the shared signal to another terminal;
   wherein the step of obtaining (101) comprises:
   performing time domain sampling processing (602), cyclic prefix, CP, removal (603) and time domain digital automatic gain control, DAGC, processing (604) in turn on the signal received from the network side; and the shared information further comprises a DAGC factor of the time domain DAGC processing performed by the terminal.

2. The method according to claim 1, wherein the step of obtaining (101) comprises additionally:

   performing fast Fourier transform, FFT, and removal (705) of information carried on a frequency domain resource of the terminal in turn on the signal after the DAGC processing; and

the shared information further comprises a serial number of a frequency domain resource corresponding to the shared signal.

3. The method according to claim 1, wherein the step of obtaining (101) comprises additionally:
   performing FFT processing (905) after the DAGC, processing (604, 904).

4. The method according to claim 3, wherein the method further comprises:

   receiving identity information of the another terminal;
   and, the obtaining further comprises:
   obtaining the shared signal according to the identity information of the another terminal.

5. A terminal, comprising:

   an obtaining unit (1501), configured to obtain a shared signal according to a signal received by the terminal from a network side, and transmit the shared signal to a sending unit (1502); and the sending unit (1502), configured to send shared information which comprises the shared signal to another terminal;
   wherein the obtaining unit comprises:

   a time domain sampling processing module, configured to perform time domain sampling processing on the signal received by the terminal from the network side;
   a CP removing module, configured to remove a cyclic prefix, CP, from the signal processed by the time domain sampling processing module; and
   a time domain digital automatic gain control, DAGC, module, configured to perform time domain DAGC processing on the signal processed by the CP removing module; and the shared information further comprises a DAGC factor of the time domain DAGC processing performed by the terminal.

6. The terminal according to claim 5, wherein the obtaining unit further comprises:

   a fast Fourier transform, FFT, module, configured to perform FFT and removal of information carried on a frequency domain resource of the terminal on the signal processed by the time domain DAGC module;
   wherein the shared information further comprises a serial number of a frequency domain resource corresponding to the shared signal.

7. The terminal according to claim 5, wherein the obtaining unit further comprises:
a fast Fourier transform, FFT, module, configured to perform FFT on the signal processed by the time domain DAGC module.

**8.** The terminal according to claim 7, further comprises:
a receiving unit, configured to receive identity information of the another terminal and transmit the identity information of the another terminal to the obtaining unit;
and, the obtaining unit is further configured to obtain the shared signal according to the identity information of the second terminal, wherein the shared signal comprises information carried on a frequency domain resource corresponding to the another terminal.

**Patentansprüche**

**1.** Verfahren für eine koordinierte Kommunikation zwischen Endgeräten, die von einem Endgerät durchgeführt wird, umfassend:

Erhalten (101) eines gemeinsam genutzten Signals gemäß einem Signal, das vom Endgerät von einer Netzseite empfangen wird; und
Senden (102) von gemeinsam genutzten Informationen, die das gemeinsam genutzte Signal umfassen, an ein anderes Endgerät;
wobei der Schritt des Erhaltens (101) umfasst:
sukzessives Durchführen einer Zeitdomänen-Abtastverarbeitung (602), einer CP (Cyclic Prefix, zyklisches Präfix)-Entfernungsverarbeitung (603) und einer Zeitdomänen-DAGC (Digital Automatic Gain Control, digitale automatische Verstärkungssteuerung)-Verarbeitung (604) für das von der Netzseite empfangene Signal; und
wobei die gemeinsam genutzten Informationen ferner einen DAGC-Faktor der Zeitdomänen-DAGC-Verarbeitung, die vom Endgerät durchgeführt wird, umfassen.

**2.** Verfahren nach Anspruch 1, wobei der Schritt des Erhaltens (101) zusätzlich umfasst:

sukzessives Durchführen einer schnellen Fourier-Transformation (Fast Fourier Transform, FFT) und Entfernen (705) von Informationen, die auf einer Frequenzdomänenressource des Endgeräts transportiert werden, für das Signal nach der DAGC-Verarbeitung; und
wobei die gemeinsam genutzten Informationen ferner eine Seriennummer einer Frequenzdomänenressource entsprechend dem gemeinsam genutzten Signal umfassen.

**3.** Verfahren nach Anspruch 1, wobei der Schritt des Erhaltens (101) zusätzlich umfasst: Durchführen einer FFT-Verarbeitung (905) nach der DAGC-Verarbeitung (604, 904).

**4.** Verfahren gemäß Anspruch 3, wobei das Verfahren ferner umfasst:

Empfangen von Identitätsinformationen des anderen Endgeräts;
und wobei das Erhalten ferner umfasst:
Erhalten des gemeinsam genutzten Signals gemäß den Identitätsinformationen des anderen Endgeräts.

**5.** Endgerät, umfassend:

eine Erhalteeinheit (1501), die dafür ausgelegt ist, ein gemeinsam genutztes Signal gemäß einem Signal, das vom Endgerät von einer Netzseite empfangen wird, zu erhalten, und das gemeinsam genutzte Signal an die Sendeeinheit (1502) zu übertragen; und
die Sendeeinheit (1502), die dafür ausgelegt ist, gemeinsam genutzte Informationen,
die das gemeinsam genutzte Signal umfassen,
an ein anderes Endgerät zu senden;
wobei die Erhalteeinheit umfasst:

ein Zeitdomänen-Abtastverarbeitungsmodul, das dafür ausgelegt ist, eine Zeitdomänen-Abtastverarbeitung für das Signal durchzuführen, das vom Endgerät von der Netzseite empfangen wird;
ein CP-Entfernungsmodul, das dafür ausgelegt ist, ein zyklisches Präfix (Cyclic Prefix, CP) von dem Signal, das vom Zeitdomänen-Abtastverarbeitungsmodul verarbeitet wird, zu entfernen; und
ein DAGC (Digital Automatic Gain Control)-Modul für eine zeitdomänenbasierte digitale automatische Verstärkungssteuerung, das dafür ausgelegt ist, eine Zeitdomänen-DAGC-Verarbeitung für das Signal, das vom CP-Entfernungsmodul verarbeitet wird, durchzuführen; und
wobei die gemeinsam genutzten Informationen ferner einen DAGC-Faktor der Zeitdomänen-DAGC-Verarbeitung, die vom Endgerät durchgeführt wird, umfassen.

**6.** Endgerät nach Anspruch 5, wobei die Erhalteeinheit ferner umfasst:

ein FFT (Fast Fourier Transform, schnelle Fourier-Transformation)-Modul, das dafür ausgelegt ist, eine FFT und eine Entfernung von Informationen, die auf einer Frequenzdomänenressource des Endgeräts transportiert werden, für das Signal durchzuführen, das vom Zeitdomänen-DAGC-Modul verarbeitet wird;
wobei die gemeinsam genutzten Informationen ferner eine Seriennummer einer Frequenzdomänenressource entsprechend dem gemeinsam genutzten Signal umfassen.

**7.** Endgerät nach Anspruch 5, wobei die Erhalteeinheit ferner umfasst:
ein FFT (Fast Fourier Transform, schnelle Fourier-Transformation)-Modul, das dafür ausgelegt ist, eine FFT für das Signal, das vom Zeitdomänen-DAGC-Modul verarbeitet wird, durchzuführen.

**8.** Endgerät nach Anspruch 7, ferner umfassend: eine Empfangseinheit, die dafür ausgelegt ist, Identitätsinformationen des anderen Endgeräts zu empfangen und die Identitätsinformationen des anderen Endgeräts an die Erhalteeinheit zu übertragen;
und wobei die Erhalteeinheit ferner dafür ausgelegt ist, das gemeinsam genutzte Signal gemäß den Identitätsinformationen des zweiten Endgeräts zu erhalten, wobei das gemeinsam genutzte Signal Informationen umfasst, die auf einer Frequenzdomänenressource entsprechend dem anderen Endgerät transportiert werden.

**Revendications**

**1.** Procédé de communication coordonnée entre terminaux réalisé par un terminal, comprenant :

l'obtention (101) d'un signal partagé en fonction d'un signal reçu par le terminal depuis un côté réseau ; et
l'envoi (102) d'informations partagées qui comprennent le signal partagé à un autre terminal ;
l'étape d'obtention (101) comprenant :
la réalisation du traitement d'échantillonnage dans le domaine temporel (602), le retrait (603) de préfixe cyclique, CP, et le traitement (604) de contrôle automatique de gain numérique dans le domaine temporel, DAGC, à son tour sur le signal reçu du côté réseau ; et les informations partagées comprenant en outre un facteur DAGC du traitement DAGC dans le domaine temporel réalisé par le terminal.

**2.** Procédé selon la revendication 1, l'étape d'obtention (101) comprenant en outre :

la réalisation d'une transformée de Fourier rapide, FFT, et la suppression (705) des informations transportées sur une ressource dans le domaine fréquentiel du terminal à son tour sur le signal après le traitement DAGC ; et
les informations partagées comprenant en outre un numéro de série d'une ressource dans le domaine fréquentiel correspondant au signal partagé.

**3.** Procédé selon la revendication 1, l'étape d'obtention (101) comprenant en outre :
la réalisation du traitement FFT (905) après le traitement DAGC (604, 904).

**4.** Procédé selon la revendication 3, le procédé comprenant en outre :

la réception des informations d'identité de l'autre terminal ;
et, l'obtention comprenant en outre :
l'obtention du signal partagé en fonction des informations d'identité de l'autre terminal.

**5.** Terminal, comprenant :

une unité d'obtention (1501), configurée pour obtenir un signal partagé en fonction d'un signal reçu par le terminal à partir d'un côté réseau, et transmettre le signal partagé à une unité d'envoi (1502) ; et
l'unité d'envoi (1502), configurée pour envoyer des informations partagées qui comprennent le signal partagé à un autre terminal ;
l'unité d'obtention comprenant :

un module de traitement d'échantillonnage dans le domaine temporel, configuré pour réaliser un traitement d'échantillonnage dans le domaine temporel sur le signal reçu par le terminal du côté réseau ;
un module de suppression de CP, configuré pour supprimer un préfixe cyclique, CP, du signal traité par le module de traitement d'échantillonnage dans le domaine temporel ; et
un module de contrôle automatique de gain numérique dans le domaine temporel, DAGC, configuré pour réaliser un traitement DAGC dans le domaine temporel sur le signal traité par le module de suppression CP ; et
les informations partagées comprenant en outre un facteur DAGC du traitement DAGC dans le domaine temporel effectué par le terminal.

**6.** Terminal selon la revendication 5, l'unité d'obtention comprenant en outre :

un module de transformée de Fourier rapide, FFT, configuré pour réaliser une FFT et la suppression des informations transportées sur une ressource dans le domaine fréquentiel du terminal sur le signal traité par le module DAGC dans le domaine temporel ;

les informations partagées comprenant en outre un numéro de série d'une ressource dans le domaine fréquentiel correspondant au signal partagé.

7. Terminal selon la revendication 5, l'unité d'obtention comprenant en outre : un module de transformée de Fourier rapide, FFT, configuré pour réaliser une FFT sur le signal traité par le module DAGC dans le domaine temporel.

8. Terminal selon la revendication 7, comprenant en outre : une unité de réception, configurée pour recevoir les informations d'identité de l'autre terminal et transmettre les informations d'identité de l'autre terminal à l'unité d'obtention ; et

l'unité d'obtention étant en outre configurée pour obtenir le signal partagé en fonction des informations d'identité du second terminal, le signal partagé comprenant des informations transportées sur une ressource dans le domaine fréquentiel correspondant à l'autre terminal.

A first terminal obtains a shared signal according to a signal received by the first terminal from a network side

101

The first terminal sends shared information to the second terminal, for enabling the second terminal to obtain information that the network side needs to send to the second terminal according to the shared information and a signal received by the second terminal from the network side, where the shared information includes the shared signal

102

Fig. 1

A second terminal receives shared information sent by a first terminal, where the shared information includes a shared signal obtained by the first terminal according to a signal received by the first terminal from a network side

201

The second terminal obtains information that the network side needs to send to the second terminal according to the shared information and a signal received by the second terminal from the network side

202

Fig. 2

Fig. 3

Fig. 4

first terminal

second terminal

501 receives a signal sent by a network side

504 receives a signal sent by a network side

502 obtain a shared signal after time domain sampling processing

505 time domain sampling processing

503 sends shared information (including the shared signal)

506 CP removal

507 time domain DAGC

508 FFT

509 demodulating

510 decoding

Fig. 5

first terminal

second terminal

601 receives a signal sent by a network side

602 time domain sampling processing

603 CP removal

604 obtain a shared signal after time domain DAGC

605 sends shared information (including the shared signal and a DAGC factor of the time domain DAGC processing performed by the first terminal on the signal with CP removed)

606 receives a signal sent by a network side

607 time domain sampling processing

608 CP removal

609 time domain DAGC

610 time domain DAGC compensation

611 FFT

612 demodulating

613 decoding

Fig. 6

first terminal

second terminal

701 receives a signal sent by a network side

707 receives a signal sent by a network side

702 time domain sampling processing

708 time domain sampling processing

703 CP removal

709 CP removal

704 time domain DAGC

710 time domain DAGC

705 obtain a shared signal after FFT processing and removal of information of a frequency domain resource of the first terminal

711 FFT

706 sends shared information (including the shared signal, a DAGC factor of the time domain DAGC processing performed by the first terminal on the signal with CP removed and a serial number of a frequency domain resource corresponding to the shared signal)

712 time domain DAGC compensation

713 demodulating

714 decoding

Fig. 7

Fig. 8

first terminal

second terminal

901 receives a signal sent by a
network side

907 receives a signal sent by a
network side

902 time domain sampling
processing

908 time domain sampling
processing

903 CP removal

909 CP removal

904 time domain DAGC

910 time domain
DAGC

905 FFT processing to obtain
a shared signal

911 FFT

906 sends shared information (including the
shared signal and a DAGC factor of the time
domain DAGC processing performed by the
first terminal on the signal with CP removed)

912 time
domain DAGC
compensation

913
demodulating

914 decoding

Fig. 9

Fig. 10

first terminal

second terminal

1101 receives a signal sent by
a network side

1108 receives a signal sent by
a network side

1102 time domain sampling
processing

1109 time domain sampling
processing

1103 CP removal

1110 CP removal

1104 time domain
DAGC

1111 time domain
DAGC

1105 FFT processing and
removal of information of a
frequency domain resource of
the first terminal

1112 FFT

1106 obtain a shared
signal after receiving
identity information of
the second terminal

1107 sends shared information (including the
shared signal and a DAGC factor of the time
domain DAGC processing performed by the
first terminal on the signal with CP removed)

1113 time
domain DAGC
compensation

1114
demodulating

1115 decoding

Fig. 11

RB_7
RB_6
RB_5
RB_4
RB_3
RB_2
RB_1
RB_0

data of UE_0

data of UE_1

data of other UE

Fig. 12

RB_7
RB_6
RB_5
RB_4
RB_3
RB_2
RB_1
RB_0

data of UE_0

data of other UE

Fig. 13

RB_7

RB_6

RB_5

RB_4

RB_3

RB_2

RB_1

RB_0

data of UE_0
and UE_1

data of
other UE

Fig. 14

first terminal 15

1501 obtaining unit

1502 sending unit

Fig. 15

first terminal 15

1501 obtaining
unit

15001 time domain sampling
processing module

1502 sending unit

## Fig. 16

first terminal 15

1501 obtaining
unit

15001 time domain sampling
processing module

15002 CP removing module

15003 time domain DAGC
module

1502 sending unit

## Fig. 17

first terminal 15

1501 obtaining unit

15001 time domain sampling processing module

15002 CP removing module

15003 time domain DAGC module

15004 FFT module

1502 sending unit

Fig. 18

second terminal 19

1901 first receiving unit

1902 second receiving unit

1903 obtaining unit

Fig. 19

Fig. 20

first terminal 15

2101 processor

2102 transmitter

2103 receiver

Fig. 21

second terminal 19

2201 first receiver

2202 second receiver

2203 processor

2204 transmitter

Fig. 22

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012142345 A1